# EUROPEAN PATENT APPLICATION

(11) **EP 4 618 625 A1**
(43) Date of publication of application: **17.09.2025**
(21) Application number: 25162240.3
(22) Date of filing: 07.03.2025
(51) Int. Cl.: H04W 36/00, H04W 84/12

(54) **ELECTRONIC APPARATUS, CONTROL METHOD THEREOF, COMPUTER-READABLE STORAGE MEDIUM STORING A PROGRAM, AND PROGRAM**

(30) Priority: 11.03.2024 JP 2024037421
(71) Applicant: CANON KABUSHIKI KAISHA, Tokyo 146-8501 (JP)
(72) Inventor: INAGAKI, Koji, Tokyo, 146-8501 (JP)
(74) Representative: TBK

(57) **Abstract**

An electronic apparatus (100) receiving, from a currently connected access point (AP), a change request of an AP serving as a connection destination, information specifying a plurality of recommended APs serving as candidates for the connection destination AP after a change made in response to the change request, and a set of parameters, including a preference value, pertaining to each of the plurality of recommended APs; changing the connection destination AP on the basis of the change request received from the currently connected AP; and performing control to change an AP serving as the connection destination such that an AP, among the plurality of recommended APs, that is determined on the basis of a first condition regardless of the preference value received from the currently connected AP, becomes the connection destination AP after the change.

## Description

### BACKGROUND OF THE INVENTION

### Field of the Invention

The present invention relates to an electronic apparatus capable of changing an access point (AP) serving as a connection destination on the basis of a request to change the connection destination received from an AP, a control method thereof, a computer-readable storage medium storing a program, and a program.

### Description of the Related Art

There is a technique, in an Extended Service Set (ESS) constituted by a plurality of access points (APs), for dynamically switching the connection destination AP such that the APs and a station (STA) can exchange data efficiently. When it is determined that the connection destination AP should be switched based on the congestion of the APs to which the STA is connected, the availability of other APs, radio wave conditions, and the like, the AP that is currently connected sends a connected AP change request to the STA. Upon receiving an AP change request, the STA can connect to the appropriate AP by switching the connection destination AP in accordance with the request.

Japanese Patent Laid-Open No. 2021-175068 discloses the following as processing for a router having AP functionality to make a request, to a wireless child device that is currently connected, to change the connection destination. A mobile router (MR1) that can connect to a plurality of wireless child devices confirms whether the wireless child device terminals support IEEE 802.11v. Whether a wireless child device terminal supports IEEE 802.11v can be determined from an Association Request frame sent when the wireless child device terminal connects to the MR1 wirelessly. If the wireless child device terminal supports IEEE 802.11v, a BSS Transition Management (BTM) Request frame is sent to the corresponding wireless child device terminal. ABSS Transition Candidate List Entries field of the BTM Request frame specifies a BSSID of a parent router RT2 as the connection destination. This prompts the child device terminal to switch the connection destination, and the wireless child device terminal switches the connection destination from the MR1 to the RT2 in accordance with the received BTM Request frame.

According to the IEEE 802.11 series communication standard, the above BSS Transition Candidate List Entries field contains zero or more Neighbor Report Elements. The Neighbor Report Elements include the BSSID, Channel Number, Preference, and the like, and the information of each BSS is indicated. Here, "Preference" indicates a connection priority expressed as 0 to 255, with "255" indicating the BSS that has the highest priority in the specified candidate list. A decrease in the numerical value of "Preference" indicates a lower priority, and the numerical value being equal indicates that the priority is equal. Note that the method for calculating the numerical value of "Preference" (called a "preference value" hereinafter) is not specified in the IEEE 802.11 series communication standard.

### SUMMARY OF THE INVENTION

The present invention provides an electronic apparatus that selects and connects to a more appropriate AP, a control method thereof, a computer-readable storage medium storing a program, and a program.

The present invention in its first aspect provides an electronic apparatus as specified in claims 1 to 14.

The present invention in its second aspect provides a method for controlling an electronic apparatus as specified in claims 15 and 16.

The present invention in its third aspect provides a computer-readable storage medium storing a program as specified in claim 17.

The present invention in its fourth aspect provides a program as specified in claim 18.

According to the present invention, an electronic apparatus can select and connect to a more optimal AP.

Further features of the present invention will become apparent from the following description of exemplary embodiments with reference to the attached drawings.

### BRIEF DESCRIPTION OF THE DRAWINGS

FIG. 1 is a diagram illustrating an example of the configuration of a system.
FIGS. 2A and 2B are diagrams illustrating an example of the configuration of an MFP.
FIGS. 3A to 3C are diagrams illustrating an example of displays made in a console unit of the MFP.
FIGS. 4A and 4B are diagrams illustrating the configuration of a mobile terminal device.
FIG. 5 is a diagram illustrating the configuration of an access point.
FIG. 6 is a sequence chart illustrating processing based on a request to change a connection destination AP from an AP.
FIG. 7 is a sequence chart illustrating processing by which an MFP switches a connection destination AP in accordance with a request to change a connection destination AP from an AP.
FIG. 8 is a flowchart illustrating processing performed by an MFP.
FIGS. 9A and 9B are flowcharts illustrating processing performed by the MFP.
FIG. 10 is a flowchart illustrating processing performed by the MFP.
FIG. 11 is a flowchart illustrating processing performed by the MFP.
FIG. 12 is a flowchart illustrating processing performed by the MFP.
FIG. 13 is a diagram illustrating a recommended AP list and the state of an MFP.
FIG. 14 is a diagram illustrating a recommended AP list and the state of an MFP.
FIG. 15 is a diagram illustrating a recommended AP list and the state of an MFP.
FIG. 16 is a diagram illustrating a recommended AP list and the state of an MFP.
FIG. 17 is a diagram illustrating a recommended AP list and the state of an MFP.
FIG. 18 is a diagram illustrating a recommended AP list and the state of an MFP.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

As described above, the method for calculating the preference value is not specified by the IEEE 802.11 series standard. Accordingly, it is unclear on what standard the calculation of the preference value is based, and when an electronic apparatus serving as a STA selects a connection destination AP according to the preference value only, an AP that is not preferable from the perspective of the electronic apparatus may be selected. What is needed, therefore, is a way for an electronic apparatus to select and connect to a more optimal AP.

According to the present disclosure, it is possible to select and connect to a more appropriate AP.

### System Configuration

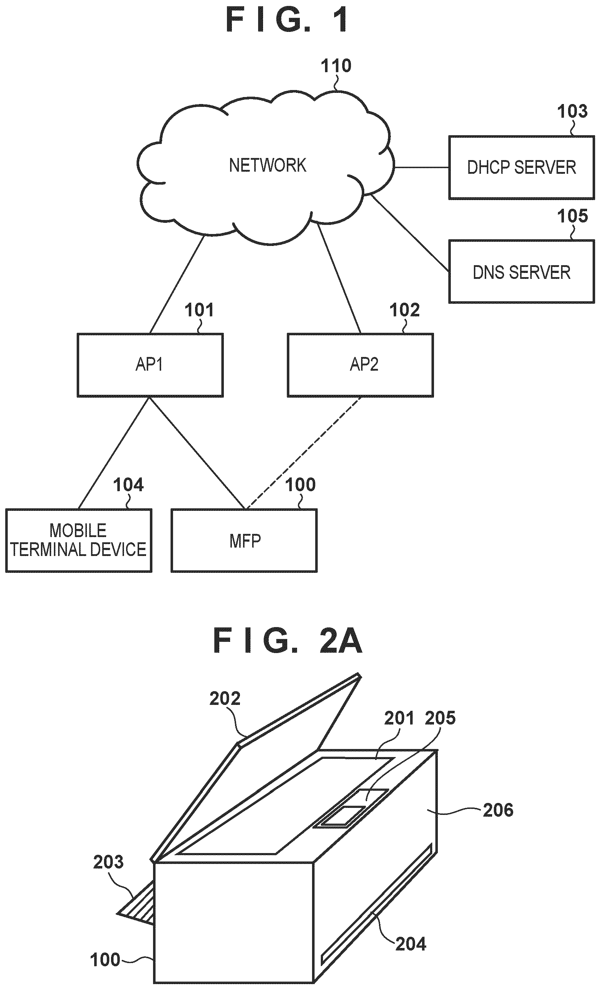

FIG. 1 illustrates an example of the configuration of a system according to the present embodiment. In one example, this system is a wireless communication system in which a plurality of communication devices can communicate with each other wirelessly. In the example illustrated in FIG. 1, a mobile terminal device 104 and an MFP 100 serving as communication devices, an AP 101 and an AP 102 which are access points, a DHCP server 103, and a network 110 are provided. Note that the AP 101 and the AP 102 may be referred to as "AP 1" and "AP 2", respectively. The mobile terminal device 104 is a device having a wireless communication function that uses wireless LAN or the like. "Wireless LAN" may be called "WLAN" hereinafter. The mobile terminal device 104 may be a personal information terminal such as a Personal Digital Assistant (PDA), a mobile phone (a smartphone), a digital camera, a personal computer, or the like.

The MFP 100 is a printing device having a printing function, and may further have a reading function (a scanner), a fax function, a telephone function, and the like. The MFP 100 according to the present embodiment also has a communication function that enables wireless communication with the mobile terminal device 104. Although the present embodiment describes a case where the MFP 100 is used as an example, the configuration is not limited thereto. For example, a scanner device, a projector, a mobile terminal, a smartphone, a laptop PC, a tablet terminal, a PDA, a digital camera, a music playback device, a television, a smart speaker, or the like, which has a communication function, may be used instead of the MFP 100. Note that "MFP" is an acronym for "Multi Function Peripheral".

The AP 101 is provided separate from (outside) the mobile terminal device 104 and the MFP 100, and functions as a WLAN base station device. A communication device having a WLAN communication function can communicate in WLAN infrastructure mode via the AP 101. Note that access points may be called "APs" hereinafter. Infrastructure mode may also be called "wireless infrastructure mode". The AP 101 communicates wirelessly with a communication device that has permitted (authenticated) a connection to itself, and relays wireless communication between that communication device and other communication devices. The AP 101 can, for example, be connected to a wired communication network, and can relay communication between a communication device connected to that wired communication network and another communication device wirelessly connected to the AP 101.

The AP 102 has the same functions as the AP 101, and the MFP 100 switches its connection from the AP 101 to the AP 102 as necessary. The DHCP server 103 connects to the MFP 100 via the AP 101 and the network 110, and provides services to the MFP 100 by responding to requests from the MFP 100. Although FIG. 1 illustrates a configuration in which the DHCP server 103 is connected as a device separate from the AP 101 and the AP 102, the configuration may be such that the AP 101 and the AP 102 have DHCP server functionality. A DNS server 105 is connected to the MFP 100, the mobile terminal device 104, and the like via the AP 101 and the network 110, and provides services for name resolution by responding to requests from the MFP 100, the mobile terminal device 104, and the like. Here, the network 110 may be the Internet, or may be a private network in a business, a mobile phone network, or the like.

### External Configuration of MFP

FIG. 2A illustrates an example of the external configuration of the MFP 100. The MFP 100 includes a document platform 201, a document cover 202, a printing paper insertion port 203, a printing paper discharge port 204, and a console unit 205, for example. The document platform 201 is a platform for placing a document to be read. The document cover 202 is a cover for securing a document placed on the document platform 201, and for ensuring that light from a light source that illuminates the document does not escape to the exterior when the document is being read. The printing paper insertion port 203 is an insertion port in which various sizes of sheets can be set. The printing paper discharge port 204 is a discharge port for discharging a sheet which has been printed onto. Paper set in the printing paper insertion port 203 is conveyed one sheet at a time to a printing unit, where the paper is printed onto and then discharged from the printing paper discharge port 204. The console unit 205 is configured including keys such as text input keys, a cursor key, an OK key, a cancel key, and the like, as well as LEDs, an LCD, and the like, and is configured such that a user can launch the various functions of the MFP, manipulate various settings, and the like. The console unit 205 may also be configured including a touch panel display. The MFP 100 has a WLAN wireless communication function and therefore is configured also including a wireless communication antenna 206 for that wireless communication, although the antenna 206 is not necessarily visible from the exterior. Like the mobile terminal device 104, the MFP 100 can communicate wirelessly over the WLAN in frequency bands such as the 2.4 GHz band, the 5 GHz band, or the like.

### MFP Configuration

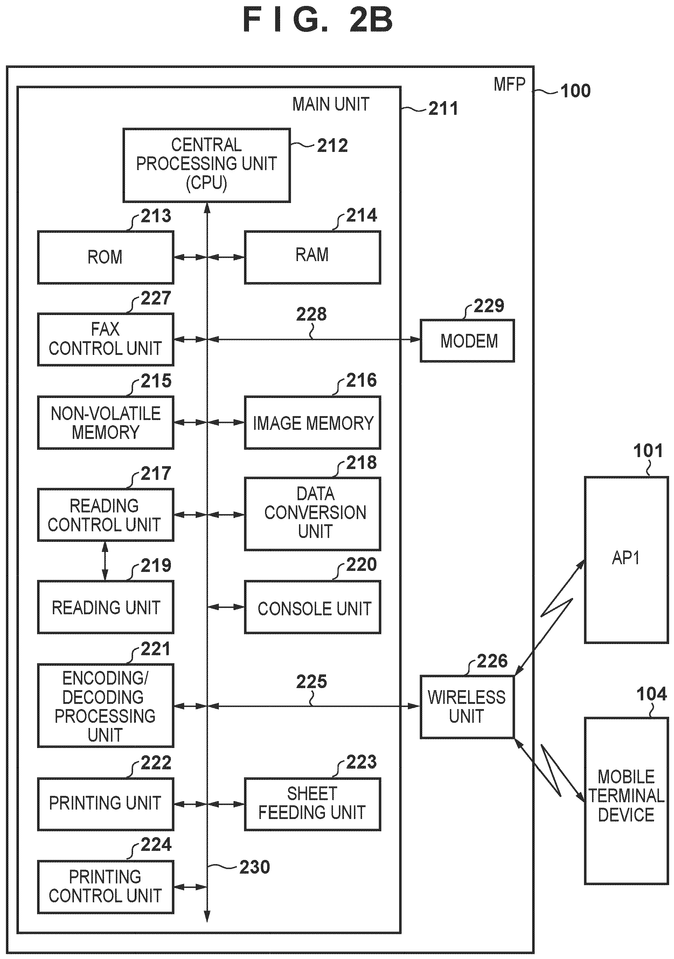

FIG. 2B illustrates an example of the configuration of the MFP 100. The MFP 100 is configured including a main unit 211 that performs main control of the device itself, and a wireless unit 226, which is a single communication module that performs WLAN communication using at least one common antenna. The MFP 100 is also configured including a modem 229 for wired communication, for example. The main unit 211 is simply a unit including function blocks other than the wireless unit 226 and the modem 229. The main unit 211 is configured including, for example, a central processing unit (CPU) 212, a ROM 213, a RAM 214, a non-volatile memory 215, an image memory 216, a reading control unit 217, a data conversion unit 218, a reading unit 219, and an encoding/decoding processing unit 221. The main unit 211 also includes, for example, a printing unit 222, a sheet feeding unit 223, a printing control unit 224, and a console unit 220. The function units in the main unit 211 are connected to each other by a system bus 230 managed by the CPU 212. Additionally, the main unit 211 and the wireless unit 226 are connected by a dedicated bus 225, for example, and the main unit 211 and the modem 229 are connected by a bus 228, for example.

The CPU 212 is a system control unit including at least one processor, and controls the MFP 100 as a whole. The processing by the MFP 100 described below is implemented by the CPU 212 executing programs stored in the ROM 213, for example. Note that dedicated hardware for each process may be provided. The ROM 213 stores control programs executed by the CPU 212, embedded OS programs, and the like. In the present embodiment, the CPU 212 performs software control such as scheduling, task switching, and the like by executing each control program stored in the ROM 213 under the management of an embedded OS, which is also stored in the ROM 213.

The RAM 214 is constituted by an SRAM or the like. The RAM 214 stores data such as program control variables, data such as setting values registered by the user and management data of the MFP 100, and the like. In addition, the RAM 214 can be used as various types of working buffers. The non-volatile memory 215 is constituted by a memory such as a flash memory, for example, and continues to store data even when the MFP 100 is turned off. The image memory 216 is constituted by a memory such as a DRAM. The image memory 216 stores image data received through the wireless unit 226, image data processed by the encoding/decoding processing unit 221, and the like. Note that the memory configuration of the MFP 100 is not limited to the configuration described above. The data conversion unit 218 analyzes data in various formats, converts image data into printing data, and the like.

The reading control unit 217 controls the reading unit 219 (e.g., a contact-type image sensor (CIS)) to optically read a document placed on the document platform 201. The reading control unit 217 converts an image obtained by optically reading the document into electrical image data (an image signal) and outputs the image data. At this time, the reading control unit 217 may perform various types of image processing, such as binarization, half-tone processing, and the like before outputting the image data.

The console unit 220 is the console unit 205 described with reference to FIG. 2A, and displays items on a display under display control by the CPU 212, generates signals in response to accepting user operations, and the like.

The encoding/decoding processing unit 221 performs encoding processing, decoding processing, scaling processing, and the like on image data handled by the MFP 100 (JPEG, PNG, and the like).

The sheet feeding unit 223 holds sheets for printing. The sheet feeding unit 223 can supply sheets set therein under the control of the printing control unit 224. The sheet feeding unit 223 may include a plurality of sheet feeding units to hold a plurality of types of sheets in a single apparatus, and from which sheet feeding unit sheets are fed can be controlled under the control of the printing control unit 224.

The printing control unit 224 applies various types of image processing, such as smoothing processing, print darkness correction processing, color correction, and the like, to the image data to be printed, and outputs the processed image data to the printing unit 222. The printing unit 222 is configured to be capable of executing ink jet printing processing, for example, so that ink supplied from an ink tank is ejected from a print head and an image is recorded on a printing medium such as paper. Note that the printing unit 222 may be configured to be capable of executing other types of printing processing, such as electrophotographic printing. The printing control unit 224 can also periodically read out information on the printing unit 222 and update status information and the like stored in the RAM 214, including the remaining amount in the ink tank, the state of the print head, and the like.

The wireless unit 226 is a unit capable of providing a WLAN communication function, and is capable of providing functions equivalent to a combination with a WLAN unit 401 of the mobile terminal device 104, for example. In other words, according to the WLAN standard, the wireless unit 226 converts data into packets and sends the packets to other devices, and also restores packets from other external devices into the original data thereof and outputs the data to the CPU 212. The wireless unit 226 is capable of communicating as a station compliant with the IEEE 802.11 standard series. The wireless unit 226 is particularly capable of communicating as a station compliant with IEEE 802.11a/b/g/n/ac/ax. "Stations" may be called "STA" hereinafter. The wireless unit 226 is also capable of communicating as a STA that supports Wi-Fi Agile Multiband (registered trademark).

The wireless unit 226 supports IEEE 802.11ax, i.e., Wi-Fi 6 (registered trademark), and is capable of processing compliant with IEEE 802.11ax. In other words, the MFP 100 is capable of either or both of processing as a STA that supports (is compliant with) OFDMA, and operations (processing) as an STA that supports (is compliant with) TWT. "OFDMA" is an acronym for "Orthogonal Frequency-Division Multiple Access". "TWT" is an acronym for "Target Wake Time". Supporting TWT means that the timing of data communication from a parent device to the STA is adjusted. The wireless unit 226 (the MFP 100) serving as the STA shifts the communication function to a sleep state when there is no need to stand by for signal reception. This makes it possible to suppress power consumption. The wireless unit 226 also supports Wi-Fi 6E (registered trademark). In other words, the wireless unit 226 is also capable of communicating in the 6 GHz band (5.925 GHz to 7.125 GHz). Unlike the 5 GHz band, the 6 GHz band does not have a band in which Dynamic Frequency Selection (DFS) is performed. As such, in communication in the 6 GHz band, communication will not be cut off due to DFS standby time, which can be expected to improve the communication.

Note that the mobile terminal device 104 and the MFP 100 are capable of P2P (WLAN) communication based on WFD, and the wireless unit 226 has a software access point (software AP) function or a group owner function. In other words, the wireless unit 226 is capable of constructing P2P communication networks, determining frequency channels to use in P2P communication, and the like.

### MFP Console Unit

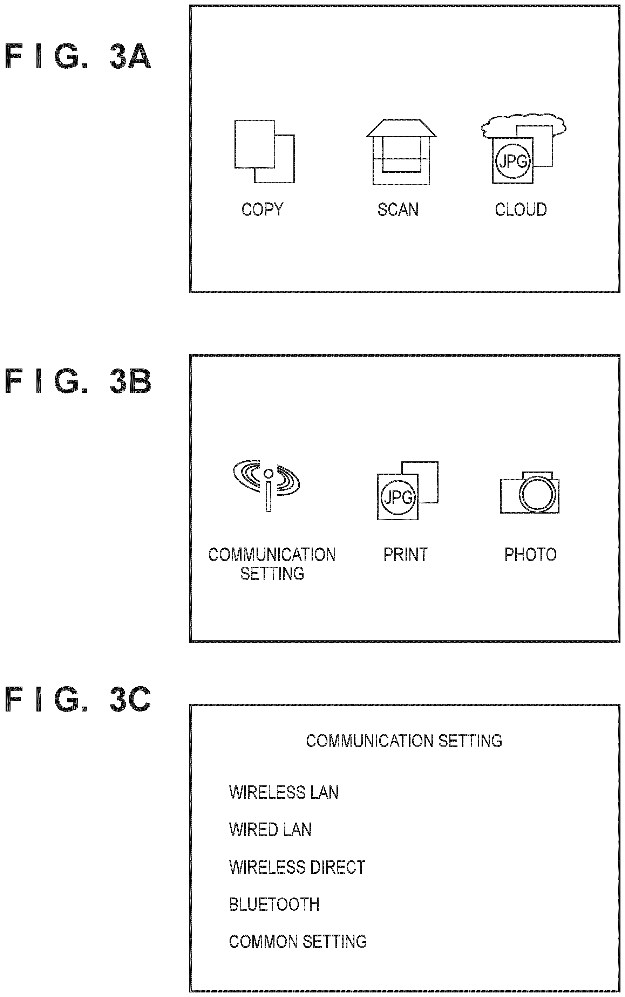

FIGS. 3A to 3C schematically illustrate examples of screens displayed on a display (a touchscreen) included in the console unit 220 of the MFP 100. FIG. 3A illustrates an example of a home screen displayed when the MFP 100 is turned on and operations such as printing, scanning, or the like are not underway (an "idle state" or a "standby state"). In FIG. 3A, display items indicating "Copy", "Scan", and "Cloud" (menu items) are displayed. "Cloud" is a menu item related to a cloud function that uses Internet communication. Settings in the MFP 100 can be made, the execution of functions can be started, and the like by operating keys, the touch panel, or the like to select one of the menu items. The MFP 100 can seamlessly display a screen different from that illustrated in FIG. 3A by accepting an operation of a key, the touch panel, or the like in the home screen illustrated in FIG. 3A.

FIG. 3B is an example of the display of another part of the home screen, and is a screen transitioned to in response to an operation for displaying another page of the home screen (an operation for sliding to the left or the right) being made in the state illustrated in FIG. 3A. In FIG. 3B, display items (menu items) indicating "Communication Settings", "Print", and "Photo" are displayed. When one of these menu items is selected, the function corresponding to the selected menu item, i.e., one of a printing function, a photo function, and communication settings, is executed.

FIG. 3C is an example of the display of a menu screen for the communication settings, displayed when "Communication Settings" has been selected in the screen illustrated in FIG. 3B. "Wireless LAN", "Wired LAN", "Wireless Direct", "Bluetooth", and "Common Settings" are displayed as menu items (options) in the communication settings menu screen. "Wireless LAN", "Wired LAN", and "Wireless Direct" are menu items for LAN settings, and settings such as wired connection settings, settings for enabling and disabling a wireless infrastructure mode, settings for enabling and disabling a P2P mode such as WFD and software AP mode, and the like can be set using these items. When the "Wireless LAN" item is selected and the wireless LAN is enabled by a user operation, wireless infrastructure mode is enabled. When the "Wireless Direct" item is selected and wireless direct is enabled by a user operation, the P2P (WLAN) mode is enabled. A common settings menu for each connection format is also displayed in this screen. Furthermore, the user can set the frequency band, frequency channel, and the like of the wireless LAN from this screen.

### External Configuration of Mobile Terminal Device

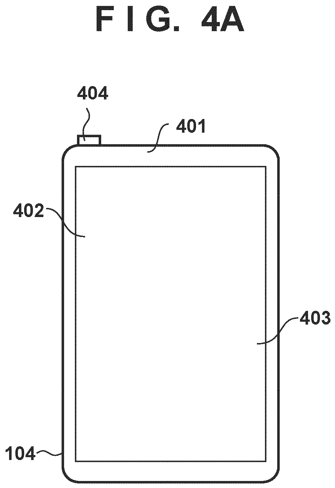

FIG. 4A is a diagram illustrating an example of the external configuration of the mobile terminal device 104. The present embodiment will describe a case where the mobile terminal device 104 is a typical smartphone, for example. Note that the mobile terminal device 104 is configured including a display unit 402, an operation unit 403, and a power key 404, for example. The display unit 402 is a display having a Liquid Crystal Display (LCD)-based display mechanism, for example. Note that the display unit 402 may display information using a Light Emitting Diode (LED) or the like, for example. The mobile terminal device 104 may also have a function for outputting information by audio in addition to or instead of the display unit 402. The operation unit 403 is configured including physical keys such as keys, buttons, and the like, a touch panel, and the like for detecting user operations. Note that in this example, the information display in the display unit 402 and the acceptance of user operations by the operation unit 403 are performed using a common touch panel display, and thus the display unit 402 and the operation unit 403 are implemented as a single device. In this case, for example, button icons or a software keyboard are displayed using a display function of the display unit 402, and the user touching those locations is detected using an operation reception function of the operation unit 403. Note that the display unit 402 and the operation unit 403 may be separate, and the hardware for display and the hardware for accepting operations may be provided individually. The power key 404 is a physical key for accepting user operations for turning the mobile terminal device 104 on or off.

The mobile terminal device 104 includes the WLAN unit 401, which provides WLAN communication functionality, but is not necessarily visible from the exterior. The WLAN unit 401 is configured to be capable of data (packet) communication in a WLAN system compliant with the IEEE 802.11 standard series (IEEE 802.11a/b/g/n/ac/ax and the like), for example. The WLAN unit 401 is also capable of communicating as an AP that supports Wi-Fi Agile Multiband (registered trademark). However, the configuration is not limited thereto, and the WLAN unit 401 may be capable of communication in a WLAN system compliant with another standard. This example assumes that the WLAN unit 401 is capable of communicating in both the 2.4 GHz and 5 GHz frequency bands. The WLAN unit 401 is also assumed to be capable of communication based on WFD, communication using the software AP mode, communication using the wireless infrastructure mode, and the like. Operations performed in these modes will be described later.

### Configuration of Mobile Terminal Device

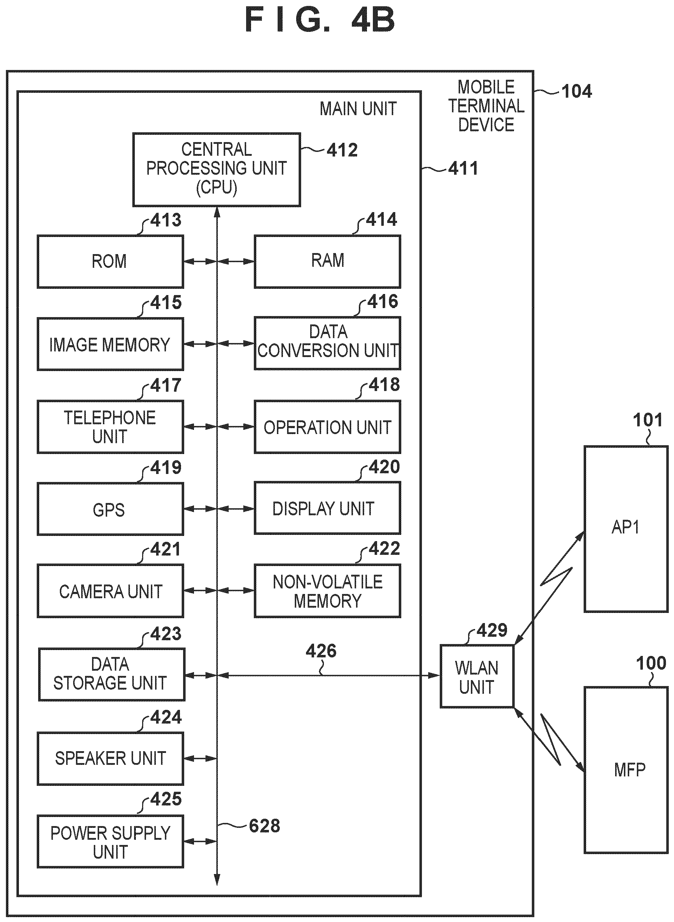

FIG. 4B illustrates an example of the configuration of the mobile terminal device 104. The mobile terminal device 104 includes a main unit 411 that performs main control of the device itself, and a WLAN unit 429 that performs WLAN communication, for example. The main unit 411 is simply a unit including function blocks other than the WLAN unit 429. The main unit 411 includes, for example, a CPU 412, a ROM 413, a RAM 414, an image memory 415, a data conversion unit 416, a telephone unit 417, a GPS 419, a camera unit 421, a non-volatile memory 422, a data storage unit 423, a speaker unit 424, and a power supply unit 425. Here, CPU is an acronym of "Central Processing Unit", ROM is an acronym of "Read Only Memory", RAM is an acronym of "Random Access Memory", and GPS is an acronym of "Global Positioning System". The mobile terminal device 104 also includes a display unit 420 and an operation unit 418. The function units in the main unit 411 are connected to each other by a system bus 628 managed by the CPU 412. Additionally, the main unit 411 and the WLAN unit 429 (the aforementioned WLAN unit 401) are connected, for example, by a dedicated bus 426.

The CPU 412 is a system control unit including at least one processor, and controls the mobile terminal device 104 as a whole. The processing by the mobile terminal device 104 described below is implemented by the CPU 412 executing programs stored in the ROM 413, for example. Note that dedicated hardware for each process may be provided. The ROM 413 stores control programs executed by the CPU 412, embedded operating system (OS) programs, and the like. In the present embodiment, the CPU 412 performs software control such as scheduling, task switching, and the like by executing each control program stored in the ROM 413 under the management of an embedded OS, which is also stored in the ROM 413.

The RAM 414 is constituted by a Static RAM (SRAM) or the like. The RAM 414 stores data such as program control variables, data such as setting values registered by the user and management data of the mobile terminal device 104, and the like. In addition, the RAM 414 can be used as various types of working buffers. The image memory 415 is constituted by a memory such as a Dynamic RAM (DRAM) or the like. The image memory 415 temporarily stores image data received through the WLAN unit 429, image data read out from the data storage unit 423, and the like for processing by the CPU 412. The non-volatile memory 422 is constituted by a memory such as a flash memory, for example, and continues to store data even when the mobile terminal device 104 is turned off. Note that the memory configuration of the mobile terminal device 104 is not limited to the configuration described above. For example, the image memory 415 and the RAM 414 may be implemented by the same memory, data may be backed up using the data storage unit 423, or the like. Additionally, although the present embodiment describes a DRAM as an example of the image memory 415, another storage medium such as a hard disk, a non-volatile memory, or the like may be used instead.

The data conversion unit 416 analyzes data in various formats, performs data conversion such as color conversion and image conversion, and the like. The telephone unit 417 controls a telephone line, and implements telephone communication by processing audio data input and output through the speaker unit 424. The GPS 419 receives radio waves transmitted from a satellite and obtains location information such as the current latitude, longitude, and the like of the mobile terminal device 104.

The camera unit 421 has a function for electronically recording and encoding an image input through a lens. The image data captured by the camera unit 421 is stored in the data storage unit 423. The speaker unit 424 performs control for implementing a function for inputting or outputting audio for the telephone function, other functions such as alarm notifications, and the like. The power supply unit 425 is a portable battery, for example, and controls the supply of power to the interior of the device. Power states include, for example, a "battery depleted state" in which there is no power remaining in the battery, a "power off state" in which the power key 404 has not been pressed, an "operating state" in which the battery is running normally, and a "power-saving state" in which the battery is operating but is in a power saving state.

The display unit 420 is the display unit 402 described with reference to FIG. 4A, and displays various types of input operations, the operating state and status of the MFP 100, and the like under the control of the CPU 412. The operation unit 418 is the operation unit 403 described with reference to FIG. 4A, and when a user operation is accepted, performs control such as generating an electrical signal corresponding to the operation, outputting the electrical signal to the CPU 412, and the like.

The mobile terminal device 104 performs wireless communication using the WLAN unit 429, and performs data communication with other devices such as the MFP 100. The WLAN unit 429 converts data into packets and sends the packets to other devices. The WLAN unit 429 also restores packets from other external devices into the original data and outputs the data to the CPU 412. The WLAN unit 429 is a unit for implementing communication compliant with each WLAN standard. The WLAN unit 429 can operate in at least two communication modes simultaneously, including wireless infrastructure mode and P2P (WLAN) mode. Note that the frequency bands used in these communication modes can be limited by the functions and performance of the hardware.

### Configuration of Access Point

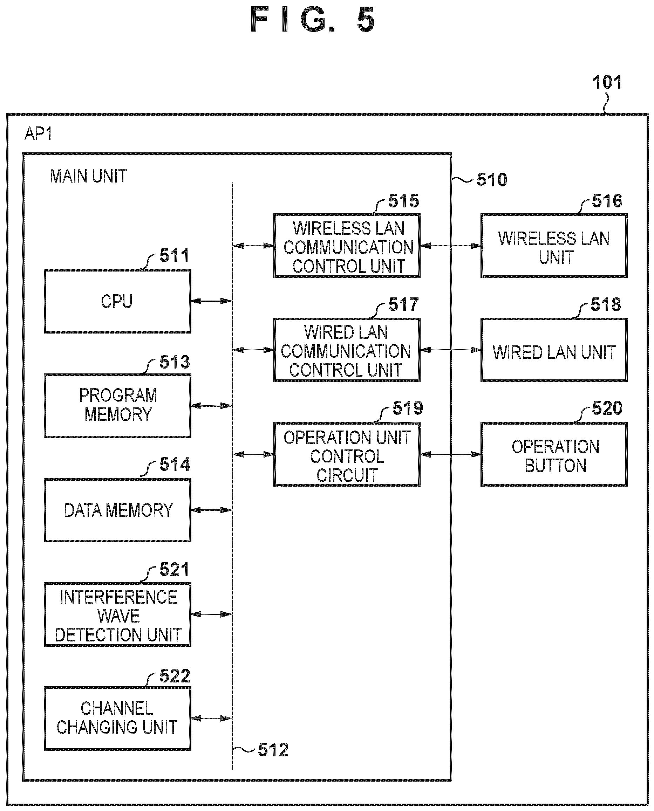

FIG. 5 is a block diagram illustrating the configuration of the AP 101 having a wireless LAN access point function. A main unit 510, which controls the AP 101, is configured including a wireless LAN unit 516, a wired LAN unit 518, and an operation button 520. The main unit 510 is simply a unit including function blocks other than the wireless LAN unit 516, the wired LAN unit 518, and the operation button 520.

A microprocessor-type CPU 511 disposed in the main unit 510 operates in accordance with a control program stored in a ROM-type program memory 513 and data in a RAM-type data memory 514, which are connected to the CPU 511 by an internal bus 512. The CPU 511 communicates with other communication terminal devices over a wireless LAN by controlling the wireless LAN unit 516 through a wireless LAN communication control unit 515. The CPU 511 also communicates with other communication terminal devices over a wired LAN by controlling the wired LAN unit 518 through a wired LAN communication control unit 517. The CPU 511 is capable of accepting operations made by a user manipulating the operation button 520, by controlling an operation unit control circuit 519. The CPU 511 includes at least one processor.

The AP 101 also includes an interference wave detection unit 521 and a channel changing unit 522. The interference wave detection unit 521 performs interference wave detection processing when communicating wirelessly in a band in which Dynamic Frequency Selection (DFS) is implemented. When communicating wirelessly in a band in which DFS is implemented, the channel changing unit 522 performs processing for changing the channel used when interference waves are detected, when it is necessary to immediately change to a free channel, and the like.

Note that the AP 102 has the same configuration as the AP 101.

### P2P Communication Method

An overview of a P2P (WLAN) communication method for devices to wirelessly communicate directly with each other without traversing an external access point in WLAN communication will be given next. P2P (WLAN) communication can be implemented through a plurality of methods, e.g., the communication device can support a plurality of modes for P2P (WLAN) communication and selectively execute P2P communication (WLAN) using one of the plurality of modes.

The following two modes are assumed as P2P modes.
- Software AP Mode
- Wi-Fi Direct (WFD) Mode

A communication device capable of P2P communication can be configured to support at least one of these modes. However, even a communication device capable of P2P communication does not have to support all of these modes, and may be configured to support only some.

In a communication device having a WFD communication function (e.g., the mobile terminal device 104), an application for implementing the communication function (in some cases, a dedicated application) is called in response to a user operation being accepted through the operation unit of the device. The communication device can then display a screen of a user interface (UI) provided by the application to prompt the user to perform an operation, and then perform WFD communication on the basis of the user operation accepted in response thereto.

### • Software AP Mode

In the software AP mode, the communication device (e.g., the mobile terminal device 104) operates in the role of a client requesting various types of services. The other communication device (e.g., the MFP 100) operates as a software AP capable of performing WLAN AP functions through software settings. Note that commands, parameters, and the like sent and received when establishing a wireless connection between the client and the software AP may be any specified by the Wi-Fi (registered trademark) standard, and will therefore not be described. The MFP 100 operating in software AP mode also determines a frequency band and a frequency channel as a parent station. Accordingly, the MFP 100 can select which frequency band to use from 5 GHz and 2.4 GHz, as well as which frequency channel to use in that frequency band.

### • WFD Mode

The MFP 100 may be started so as to be fixed as the parent station for the WFD mode (Autonomous Group Owner). In this case, GO Negotiation processing for determining the role is unnecessary. Furthermore, in this case, the MFP 100 also determines the frequency band and the frequency channel to be used as the parent station. Accordingly, the MFP 100 can select which frequency band to use from 5 GHz and 2.4 GHz, as well as which frequency channel to use in that frequency band.

### Wireless Infrastructure Mode

In wireless infrastructure mode, communication devices that communicate with each other (e.g., the mobile terminal device 104 and the MFP 100) are connected to an external AP that manages the network (e.g., the AP 101), and the communication devices communicate with each other through the AP. In other words, communication between the communication devices is executed over a network constructed by an external AP. The mobile terminal device 104 and the MFP 100 both discover the AP 101, and by sending a connection request and connecting to the AP 101, those communication devices can communicate in wireless infrastructure mode via the AP 101. Note that a plurality of communication devices may be connected to individual separate APs. In this case, the communication devices can communicate by data being transferred among the APs. The commands, parameters, and the like sent and received during communication between the communication devices via the access points may be any specified by the Wi-Fi standard, and will therefore not be described. In this case, the AP 101 also determines the frequency band and the frequency channel. Accordingly, the AP 101 can select which frequency band to use from 5 GHz or 2.4 GHz and 6 GHz, as well as which frequency channel to use in that frequency band.

### Processing in Response to Request to Change Connection Destination AP to STA from AP

The mobile terminal device 104 and the MFP 100 correspond to functions disclosed as Wi-Fi Agile Multiband (registered trademark). Wi-Fi Agile Multiband is a function that enables the selection of an optimal environment in response to changing conditions of a Wi-Fi network. To be more specific, a STA such as the mobile terminal device 104 and the MFP 100, and an AP such as the AP 101, exchange information about the network environment using an IEEE 802.11 series communication standard. By exchanging information in this manner, when the network is congested, the AP can guide the STA (change the connection destination) to another AP, a frequency band, a channel, or even another cellular service.

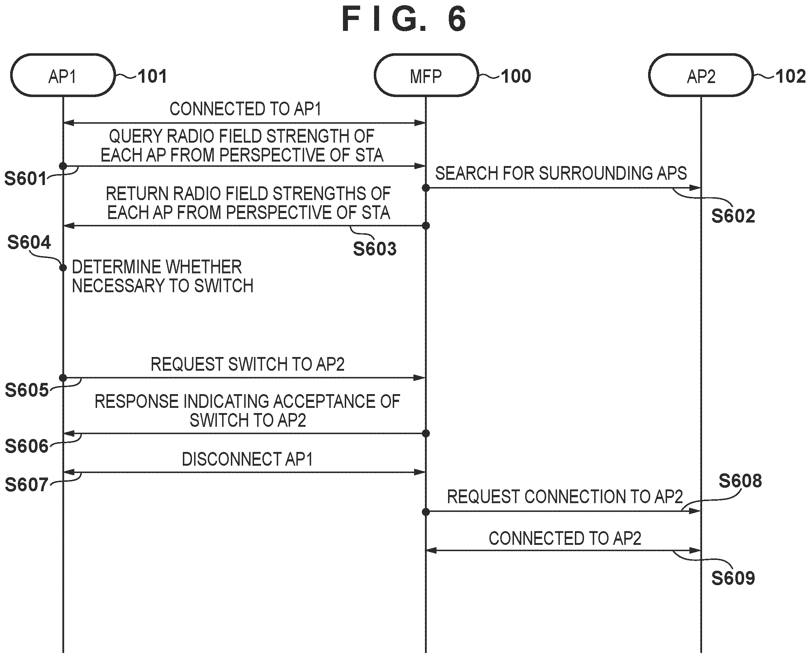

FIG. 6 is a sequence chart illustrating a case where the MFP 100 switches the connection destination AP (an AP serving as the connection destination) from the AP 101 to the AP 102 in accordance with a change request to change the connection destination AP (a change request of an AP serving as a connection destination) from the AP 101. Processing executed by each device in this sequence is implemented by the CPU of each device reading out various programs stored in a memory provided in that device, such as a ROM or the like, into a RAM and executing those programs.

In the initial state of the processing illustrated in FIG. 6, it is assumed that the MFP 100 has established a connection with the AP 101 in wireless infrastructure mode. When the MFP 100 and the AP 101 connect in wireless infrastructure mode, the AP 101 obtains information as to whether the MFP 100 supports IEEE 802.11v. It is assumed that the following processing is then performed when the AP 101 has successfully obtained information indicating that the MFP 100 supports IEEE 802.11v.

In step S601, the AP 101 sends a query (a measurement request) to the MFP 100 regarding the radio wave strength of the APs around the MFP 100. This query is sent, for example, as a beacon frame request or a beacon report request. In other words, a mechanism defined in the IEEE 802.11k standard can be used for this request.

In step S602, in response to the request received in step S601, the MFP 100 receives frames transmitted by the surrounding APs and measures the radio wave strengths thereof. As a result, the radio wave strength of each of the plurality of APs, including the AP 101 and the AP 102, is measured.

In step S603, the MFP 100 sends a list of the radio wave strengths of the APs around the MFP 100, measured in step S602, as a response to the request received in step S601. The radio wave strengths provided in the response may be information saved in the RAM 214, the non-volatile memory 215, and the like of the MFP 100, in addition to or instead of the information measured in step S602. This response is sent, for example, as a beacon report or a measurement report.

In step S604, the AP 101 determines whether it is necessary to switch the connection destination of the MFP 100 on the basis of the congestion state in the network, which the AP 101 has ascertained, and the radio wave strengths received from the MFP 100 in step S603. The AP 101 determines that it is necessary to switch the connection based on factors such as there being a large number of connected STAs, a high communication volume, other APs experiencing less congestion, the presence or absence of mixed radio waves, AP functions being suspended, and the like. When it is determined that it is necessary to switch the connection destination of the MFP 100, and the Basic Service Set Identifier (BSSID), the channel, and the frequency band of the other AP designated to be switched to by the MFP 100 are determined, the sequence moves to step S605. Note that in the present embodiment, the SSID of the other AP designated as the connection destination is the same as the SSID of the pre-change AP (the BSSID is different for each AP).

In step S605, the AP 101 sends an AP change request (a connection destination switching request) to the MFP 100. The connection destination AP change request includes the BSSID, channel, and frequency band information of the other AP designated to be switched to by the MFP 100, determined in step S604. Note that a plurality of BSSIDs may be designated. The present embodiment assumes that the same SSID is set for the APs for which the connection destinations are switched through Wi-Fi Agile Multiband, and that each AP can be identified by a Media Access Control address ("MAC address" hereinafter) (BSSID). Accordingly, the other AP designated as a candidate for the connection destination after the change can be identified by the MAC address, even if the SSID is the same as that of the pre-change AP. The connection destination AP change request is sent as a BTM request, for example. In other words, a BSS Transition Management (BTM) Request frame, defined in the IEEE 802.11v standard, is sent. The example illustrated in FIG. 6 assumes that the AP 102 is designated as the switch destination included in the connection destination AP change request. In other words, in the present embodiment, the SSID of the AP 101 is the same as the SSID of the AP 102.

In step S606, if the connection destination AP change request received in step S605 is to be complied with, the MFP 100 sends a response indicating approval of the switch to the AP 101. If the connection destination AP change request is not to be complied with, a switch rejection may be sent as a response. The response is sent as a BTM response. The example in FIG. 6 assumes that a response indicating approval is sent.

In step S607, the AP 101 and the MFP 100 terminate the connection in wireless infrastructure mode.

In step S608, the MFP 100 sends a connection request to the AP 102 so as to connect to the AP 102 designated in the connection destination AP change request received in step S605.

As a result, in step S609, a connection between the MFP 100 and the AP 102 is established in wireless infrastructure mode.

Using such a mechanism, the MFP 100, which is the STA, can change the connection destination from the AP 101 to the AP 102 on the basis of the connection destination AP change request from the AP 101 to which the MFP 100 was originally connected. The AP 101 and the AP 102 may be APs installed in different locations. In other words, through the processing illustrated in FIG. 6, the MFP 100 can switch to another AP installed in a location different from the AP to which the MFP 100 was originally connected. There are also situations where the AP handles mutually-different frequency bands among a plurality of frequency bands provided by the same device (two or three of the 2.4 GHz band, the 5 GHz band, or the 6 GHz band). In other words, through the processing illustrated in FIG. 6, the MFP 100 can switch to another frequency band provided by the same device as the AP to which the MFP 100 was originally connected. For example, the connection destination can be changed to an AP in the 6 GHz band on the basis of the connection destination AP change request.

Although the present embodiment describes an example in which the measurement request and a connection destination AP change request from the AP are sent using a mechanism compliant with Wi-Fi Agile Multiband, and the STA responds thereto, the configuration is not limited thereto. The present embodiment can be applied even if the STA makes a response, changes the connection destination AP (switches, deletes, or adds an AP to serve as a connection destination), or the like in response to a measurement request or a connection destination AP change request sent from the AP using a different mechanism from that in the example described above.

There are situations where changing the connection destination AP based on a change request for changing the connection destination AP sent from the AP currently connected poses no problems, and situations where doing so is not desirable. In situations where changing the connection destination AP based on a change request is not desirable, one or more of the following types of processing can be combined as processing for suppressing a change in the connection destination in response to the change request. The following processing is processing that prevents or makes it difficult to change the connection destination AP based on a change request.

### Suppression Processing 1

Even if the change request described with reference to step S605 is received, the connection destination AP is not changed based on the received connection request, and the change request is not responded to; or, a response indicating that the change request has been rejected (that the connection destination AP will not be changed) is sent to the AP currently connected. When a rejection response is sent, the priority of the connection destination change for another STA connected to the AP currently connected to the MFP 100 is raised and the priority of the connection destination change for the MFP 100 that returned the rejection response is lowered. As a result, the connection with the AP that has been connected can be maintained. If no response is returned (that is, the request is ignored), it is thought that the AP currently connected will maintain the connection with the MFP 100 to wait for a response until a timeout following a response standby time. Accordingly, in a situation where the connection is terminated immediately in accordance with some response to a change request from the MFP 100, the connection with the AP currently connected can be maintained longer by not responding rather than returning some kind of response. Accordingly, for example, on the basis of information indicating the reason for the change included in the change request, the processing can be varied according to the reason, such as rejecting the request if the reason is weak or ignoring the request if the reason is strong. The reason for the change can be determined on the basis of, for example, information included in Request Mode in the BTM Request, indicating which of several reasons is applicable. For example, if the Disassociation Imminent bit or the BSS Termination Included bit of Request Mode is 1, the change request can be determined to be a request in which the reason for the change is strong. Otherwise, the change request can be determined to be a request in which the reason for the change is weak.

### Suppression Processing 2

In response to the measurement request described in step S601, information indicating that the radio wave reception conditions (signal reception conditions) of an unconnected AP other than the AP currently connected are worse than the actual measured conditions (poor or low signal quality) is provided as a response (a false response). In this case, the response may be made after taking an actual measurement in response to the reception of the measurement request, or the response may be made without actually taking a measurement. Specifically, in the response described with reference to step S603 (a beacon report or the like), a value indicating a lower received signal strength and/or a value indicating higher noise (signal-to-noise ratio) is provided as a response to the signal quality measured for the signal received from the unconnected AP. Alternatively, the response may be a response that does not include at least one piece of information on the unconnected AP. Processing may also be performed in which the response is provided having set the received signal strength to an extremely low value or having set the noise to an extremely high value, on the basis of information measured for the unconnected AP in the past. Even if a measurement request is received, a response indicating a good received signal strength or noise conditions only for the AP currently connected may be provided, without taking an actual measurement (AP search) and without including the information on the unconnected AP. Responding to the measurement request without including the information on the unconnected AP in the response corresponds to content indicating that no other unconnected AP has been found even after performing an AP search. In other words, not including the information on the unconnected AP in the response indicates that the signal quality from the unconnected AP is at least partially worse (of a lower quality) than when the AP search was actually performed.

By doing so, connection destination AP change requests being sent from the AP currently connected to other APs can be expected to be suppressed. A change in the connection destination in response to the connection destination AP change request is therefore suppressed.

### Suppression Processing 3

The AP currently connected is temporarily disconnected, information indicating that the change request is not supported is provided, and the same AP is then reconnected. Specifically, the wireless connection with the AP currently connected is temporarily terminated, and data of the Association Request frame, including information indicating that IEEE 802.11v is not supported, is generated as a preparation for reestablishing the wireless connection. Processing for connecting to the AP is then performed using the generated Association Request frame data. As a result, if an Association Request frame including information indicating that IEEE 802.11v is not supported is generated, the AP is connected to as an electronic apparatus that does not support the functions of Agile Multiband. As a result, the AP currently connected recognizes that the MFP 100 does not support IEEE 802.11v, and does not send a wireless connection destination AP change request to the MFP 100. As a result, the request to change the wireless connection is no longer made to the MFP 100, and thus the wireless connection between the MFP 100 and the AP currently connected is easier to maintain. In addition, if the AP currently connected recognizes that the MFP 100 does not support IEEE 802.11v, the transmission of the measurement request (the request described with reference to step S601) from the AP currently connected to the MFP 100 is also stopped. Accordingly, the measurement in response to the measurement request (the AP search) and the response to the measurement request (the processing of step S603) can also be suppressed in the MFP 100. The processing load and power consumption can be reduced by that amount, and the resources can be allocated to other processing.

For example, printing data being received corresponds to a state where it is not desirable to change the connection destination AP based on a change request. The MFP 100 receiving printing data corresponds to a state where some of the printing data of an image to be printed has already been received by the mobile terminal device 104, which is the partner device, but the remainder of the printing data has not yet been received. The MFP 100 does not store all of the printing data to be printed on a single sheet of paper. Accordingly, the MFP 100 prints by repeating an operation in which some of the printing data is received and then printed (e.g., one line's worth of printing data is received and printed), after which the next data is received and then printed. If the connection destination AP is changed based on a connection destination AP change request while the printing data is being received, the processing for switching the connection destination will produce time lag, which may lead to a drop in the print quality, such as by producing unevenness in the printing. Additionally, the quality of communication with the mobile terminal device 104, which is the partner device, may drop after the connection destination is switched, making it impossible to receive the subsequent data and resulting in a printing failure. It is therefore preferable to perform at least one of the processing of the above-described Suppression Processing 1 and Suppression Processing 2 as processing for suppressing a change in the connection destination in response to a change request while printing data is being received, or to perform the processing of the above-described Suppression Processing 3 before starting to receive printing data.

Although the foregoing describes the MFP 100 as performing at least one of Suppression Processing 1 to 3 during the reception of the print data as an example, the configuration is not limited thereto. For example, the MFP 100 may perform at least one of Suppression Processing 1 to 3 during the reception of other data different from the print data, or during the transmission of the other data. For example, at least one of Suppression Processing 1 to 3 may be performed even when the MFP 100 scans a document using the reading unit 219 and transmits the scanned image (image data) to the mobile terminal device 104 via the AP.

In this manner, the MFP 100 controls the connection destination AP to be switched in accordance with the change request in situations where changing the connection destination AP on the basis of the change request to change the connection destination AP poses no problems. However, in situations where changing the connection destination AP based on a change request is not desirable, the MFP 100 can combine one or more of Suppression Processing 1 to 3 as processing for suppressing a change in the connection destination in response to the change request.

Incidentally, a connection destination AP change request received by an electronic apparatus such as the MFP 100 from an AP currently connected thereto may include information on a plurality of APs recommended as connection destination APs (called "recommended APs" hereinafter) and a Preference (called a "preference value" hereinafter) indicating connection priorities for the recommended APs set by the AP currently connected. The preference value is a numerical value from 0 to 255, for example, and a higher numerical value indicates a higher connection priority. Although the preference value is a numerical value determined by the AP currently connected, the method for calculating the preference value is not specified by the IEEE 802.11 series communication standard. Accordingly, it is unclear what standard the AP currently connected uses to calculate the preference value, and when the MFP 100 serving as a STA selects a connection destination AP according to the preference value only, an AP that is not preferable from the perspective of the MFP 100 may be selected. What is needed, therefore, is a way for an electronic apparatus such as the MFP 100 to select and connect a more optimal AP.

In the present embodiment, the MFP 100 receives, from an access point (AP) that is currently connected, a connection destination AP change request, information specifying a plurality of recommended APs serving as candidates for the connection destination AP after the change made in response to the change request, and a set of parameters, including preference values, pertaining to each of the plurality of recommended APs. The MFP 100 changes the connection destination AP on the basis of a change request received from an AP that is currently connected. The MFP 100 performs control to change an AP serving as the connection destination such that an AP, among the plurality of recommended APs, that is determined on the basis of a condition other than the preference value becomes the connection destination AP after the change, regardless of the received preference values. Such a configuration makes it possible for an electronic apparatus such as the MFP 100 to select and connect to a more optimal AP.

### Selection of Connection Destination AP

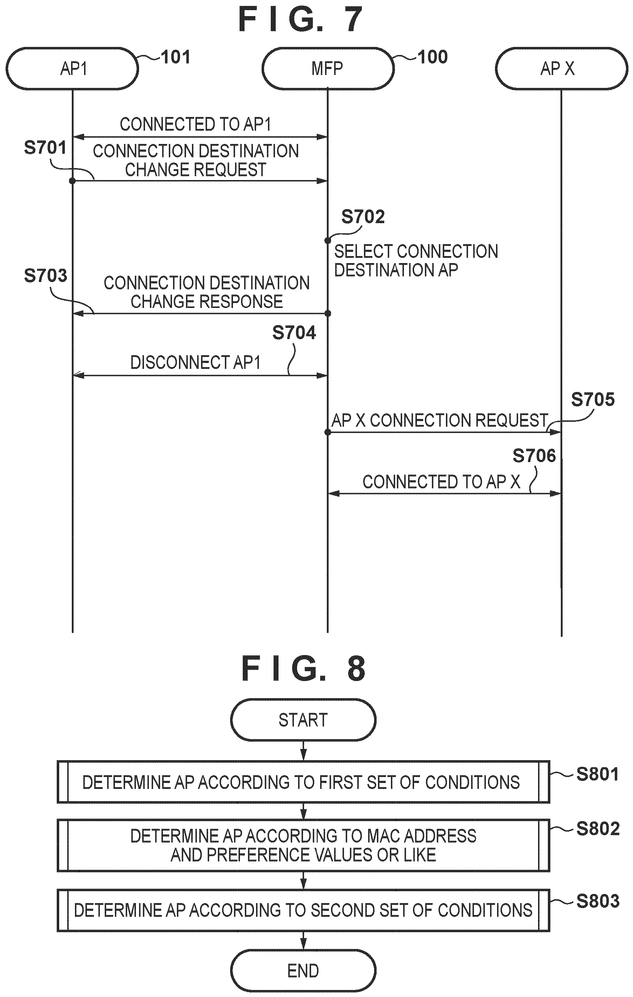

FIG. 7 is a sequence chart illustrating a case where the MFP 100 switches the connection destination AP from the AP 101 to an AP X different from the AP 101 in accordance with a connection destination AP change request from the AP 101. Processing executed by each device in this sequence is implemented by the CPU of each device reading out various programs stored in a memory provided in that device, such as a ROM or the like, into a RAM and executing those programs.

In the initial state of the processing illustrated in FIG. 7, it is assumed that the MFP 100 has established a connection with the AP 101 in wireless infrastructure mode. When the MFP 100 and the AP 101 connect in wireless infrastructure mode, the AP 101 obtains information as to whether the MFP 100 supports IEEE 802.11v. It is assumed that the following processing is then performed when the AP 101 has successfully obtained information indicating that the MFP 100 supports IEEE 802.11v.

In step S701, the AP 101 sends a connection destination AP change request to the MFP 100. The connection destination AP change request includes information on the BSSID (MAC address), channel, and frequency band, the preference value, and the like of the other AP designated to be switched to by the MFP 100. In step S701, for example, the AP 101 transmits the connection destination AP change request as a BTM request. In other words, the AP 101 sends a BSS Transition Management (BTM) Request frame, defined in the IEEE 802.11v standard. In the example illustrated in FIG. 7, a plurality of Neighbor Report Elements are included in the BSS Transition Candidate List Entries field of the stated BTM Request frame. In other words, a plurality of recommended APs are designated as destinations for the switch included in the connection destination AP change request. Accordingly, the connection destination AP change request includes the BSSIDs (MAC addresses), frequency channels, frequency bands, preference values, and the like of the plurality of recommended APs designated as switch destinations by the MFP 100. In other words, in step S701, the MFP 100 receives, from the AP 101 that is currently connected, a connection destination AP change request, information specifying a plurality of recommended APs serving as candidates for the connection destination AP after the change made in response to the change request, and a set of parameters, including preference values, pertaining to each of the plurality of recommended APs. The information specifying the plurality of recommended APs is, for example, the BSSIDs (MAC addresses). The set of parameters includes information on the frequency channel and the frequency band, the preference value, and the like. Note that in the following descriptions, the frequency channel (channel number) may be called a "channel", "CH", or the like.

In step S702, the MFP 100 performs processing for selecting the connection destination AP from among the plurality of recommended APs included in the connection destination AP change request. In FIG. 7, the AP selected by the MFP 100 in step S702 is indicated as "AP X". Note that the processing by which the MFP 100 selects the connection destination AP in step S702 will be described in detail later.

In step S703, the MFP 100 makes a response to change the connection destination AP to the AP 101. Then, in step S704, the MFP 100 terminates the connection with the AP 101. Step S703 corresponds to the processing of step S606, and step S704 corresponds to the processing of sending a response indicating approval of the switch to the AP 101 in step S606.

In step S705, the MFP 100 sends a connection request to the AP X. Then, in step S706, a connection between the MFP 100 and the AP X is established. The processing of steps S705 and S706 is the same as the processing of steps S608 and S609.

### Processing for Selecting Connection Destination AP

FIG. 8 is a flowchart illustrating an example of processing by which the MFP 100 selects the connection destination AP in step S702. The processing in FIG. 8 is realized, for example, by the CPU 212 reading out a program stored in the ROM 213, which is a computer-readable recording medium, into the RAM 214 and executing that program.

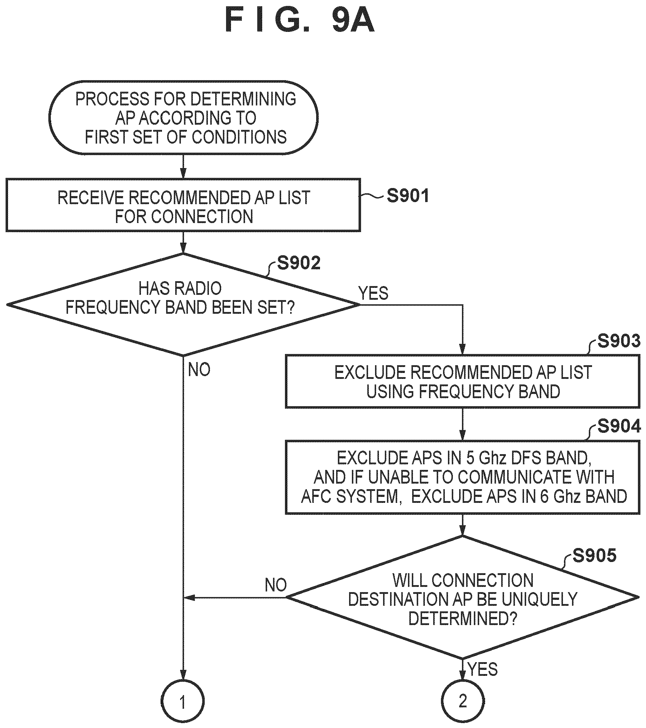

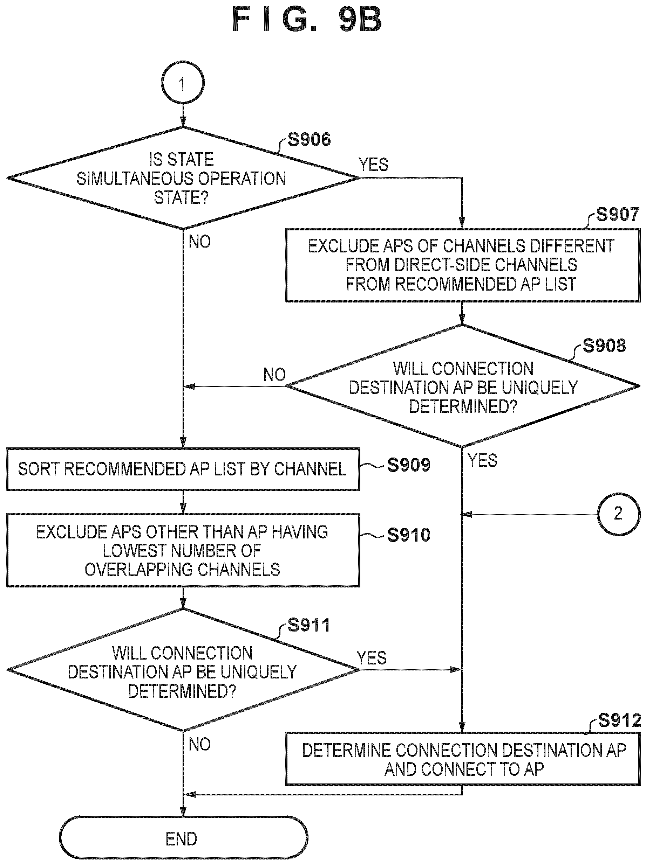

Step S801 is processing for the CPU 212 to determine the connection destination AP on the basis of a first set of conditions different from the preference value, regardless of the preference value received in step S701, and will be described in detail with reference to FIGS. 9A and 9B.

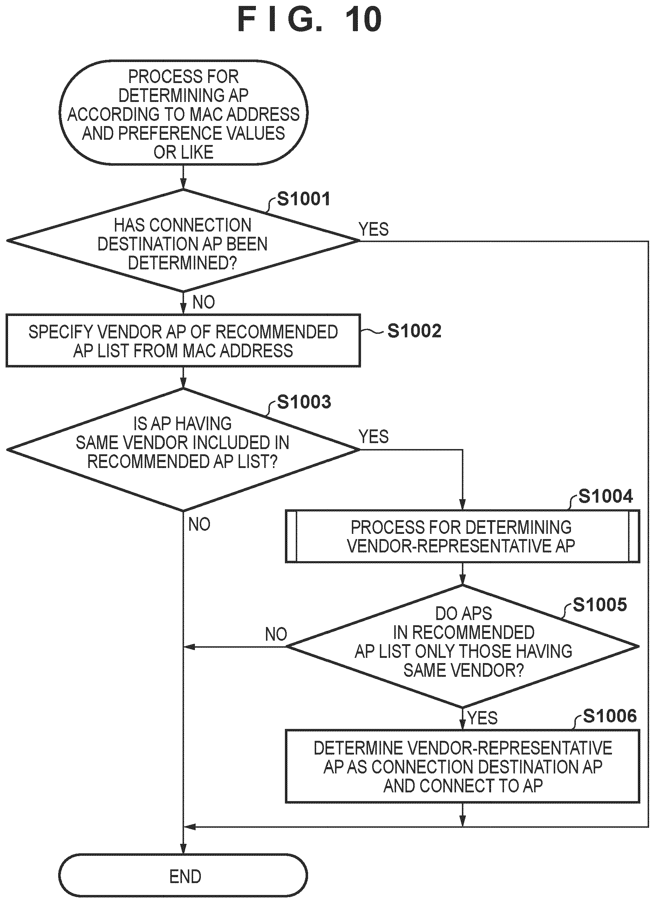

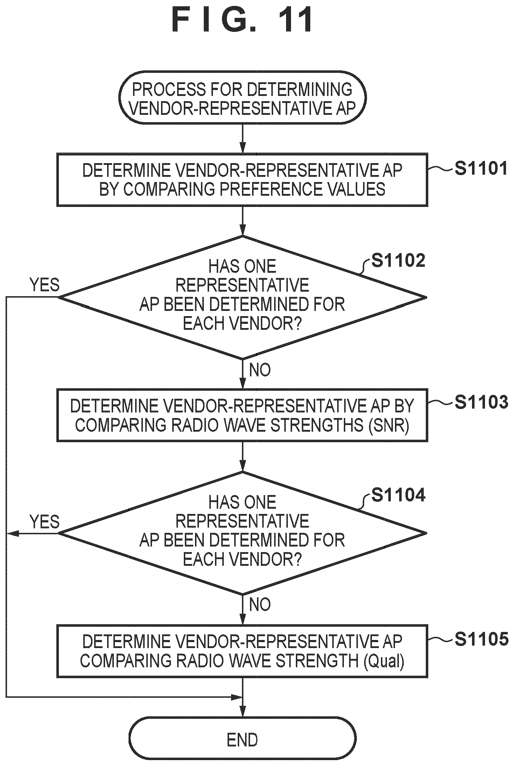

Step S802 is processing for the CPU 212 to determine the connection destination AP on the basis of the MAC address, preference values, or the like, and will be described in detail with reference to FIGS. 10 and 11. For example, there are cases where the connection destination AP is not determined in the processing of step S801, and thus the CPU 212 executes this processing.

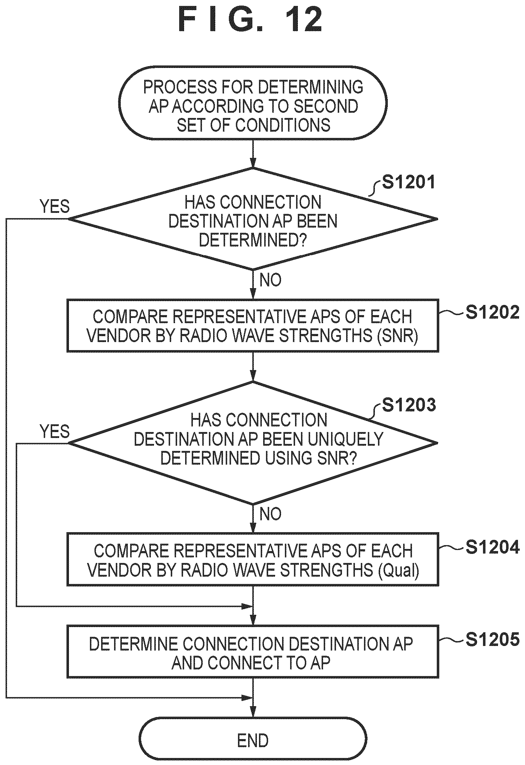

Step S803 is processing by which the CPU 212 determines the connection destination AP on the basis of a second set of conditions, and will be described in detail with reference to FIG. 12. For example, there are cases where the connection destination AP is not determined in the processing of steps S801 and S802, and thus the CPU 212 executes this processing.

FIGS. 9A and 9B will be referred to next. FIGS. 9A and 9B are flowcharts illustrating an example of processing for determining the connection destination AP on the basis of the first set of conditions, executed in step S801. The processing in FIGS. 9A and 9B is realized, for example, by the CPU 212 reading out a program stored in the ROM 213, which is a computer-readable recording medium, into the RAM 214 and executing that program.

In step S901, the CPU 212 obtains information including the BSSIDs (MAC addresses), channels, frequency bands, preference values, and the like of the plurality of recommended APs received from the AP 101 in step S701 described above, and holds the information as a recommended AP list. The recommended AP list is a list of a plurality of recommended APs serving as candidates for the connection destination AP.

In step S902, the CPU 212 confirms the radio frequency setting state of the MFP 100. The CPU 212 then determines whether the radio frequency is being set. If the CPU 212 determines in step S902 that the radio frequency band is being set, the sequence moves to step S903. However, if the CPU 212 determines that the radio frequency band has not been set, the sequence moves to step S906.

The setting of the radio frequency of the MFP 100 will be described here. For example, the CPU 212 displays an interface (not shown) capable of accepting an instruction to change the wireless LAN frequency band and frequency channel settings when a predetermined item in FIG. 3C, described above, has been selected by the user. The CPU 212 stores a setting value in the non-volatile memory 215 on the basis of an instruction to change the setting having been accepted. In other words, the setting value is information on the frequency and frequency channel used by the MFP 100 to communicate with external APs. For example, the setting value includes at least one of the 2.4 GHz band, the 5 GHz band, and the 6 GHz band as the frequency. The setting value also includes the frequency channels used in each of those frequencies.

In other words, if in step S902 the frequency band used by the MFP 100 is specified and a setting value among those described above is stored in the non-volatile memory 215, the CPU 212 moves the sequence to step S903. On the other hand, if the frequency band used by the MFP 100 is not specified and a setting value among those described above is not stored in the non-volatile memory 215, the CPU 212 moves the sequence to step S906.

In step S903, the CPU 212 excludes, from the plurality of recommended APs in the recommended AP list held in step S901, recommended APs that do not match the setting value. For example, if the MFP 100 is set to use only the 5 GHz band, the CPU 212 excludes recommended APs in the 2.4 GHz band. Additionally, if, for example, the MFP 100 is set to use channel 36, the CPU 212 excludes recommended APs on channels aside from channel 36 from switch destination candidates. In other words, the processing of step S903 is processing for, when at least one of the frequency band and the channel used by the MFP 100 is set, selecting a recommended AP that matches that setting as the post-change connection destination AP. This makes it possible to avoid connecting the MFP 100 to an AP that uses a frequency band other than the frequency band set intentionally by the user.

Note that in step S903, the CPU 212 is not limited to excluding recommended APs, among the recommended APs in the AP list, that do not match the setting value on the basis of setting values set by the user by operating the MFP 100. For example, the CPU 212 may store, in the non-volatile memory 215, a setting value for the frequency band used by the MFP 100 specified from the connected mobile terminal device 104. Then, in step S903, the CPU 212 may exclude APs, among the recommended APs in the AP list, that do not match the setting value on the basis of the setting value specified from the mobile terminal device 104.

In step S904, the CPU 212 excludes recommended APs, in the recommended AP list, that are associated with channels in the 5 GHz band and the DFS band, from switching destination candidates. In other words, the CPU 212 excludes recommended APs operating in channels in the 5 GHz band and the DFS band from the AP list. Additionally, in step S904, if the MFP 100 is unable to communicate with an Automated Frequency Coordination (AFC) system, the CPU 212 excludes recommended APs in the 6 GHz band from the AP list. Note that in step S904, the CPU 212 may exclude the stated recommended APs from the AP list only when the MFP 100 is operating on Standard Power. This makes it possible, for example, to reduce the likelihood that the MFP 100 will connect to an AP at a frequency for which frequency band interference is limited (not permitted) in a specific country or the like.

In step S905, the CPU 212 determines whether a candidate for the connection destination AP will be uniquely determined using the excluded recommended AP list. If the CPU 212 determines that a candidate will be uniquely determined, the sequence moves to step S912. However, if the CPU 212 determines that a candidate will not be uniquely determined, the sequence moves to step S906. The CPU 212 determines that a candidate will not be uniquely determined when a plurality of recommended APs remain in the recommended AP list.

### Case 1

In step S912, the CPU 212 performs control to connect to the recommended AP determined to be uniquely determined in step S905. Hereinafter, a case where the CPU 212 determines that the connection destination AP will be uniquely determined in step S905 (YES in step S905) and executes the processing of step S912 will be referred to as "Case 1". In other words, the CPU 212 executes the sequence from step S702 on such that the connection destination AP after the change made in response to the connection destination AP change request becomes the recommended AP that is uniquely determined.

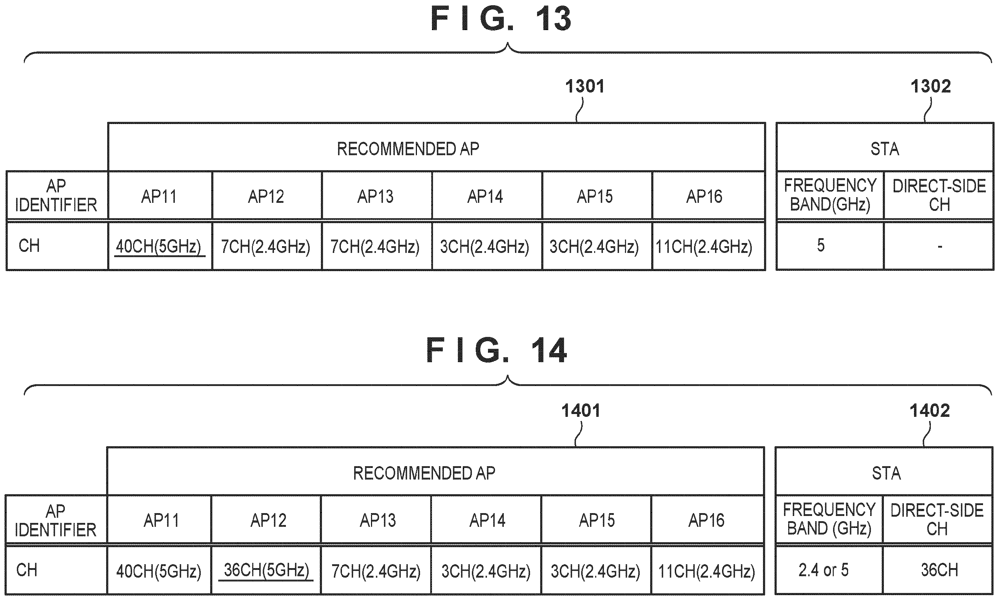

Refer to FIG. 13. FIG. 13 is a diagram illustrating an example of the recommended AP list and the setting state of the MFP 100 when the connection destination AP is uniquely determined in Case 1.

A recommended AP list 1301 is a table showing the plurality of recommended APs and the frequency bands of the plurality of recommended APs, which are included in the connection destination AP change request received by the CPU 212 from the AP 101 in step S701. The recommended AP list 1301 is the recommended AP list held by the CPU 212 in step S901. In this example, the recommended AP list 1301 indicates six recommended APs, namely APs 11 to 16, and the respective channels and frequency bands of the APs 11 to 16. In this example, the recommended AP list 1301 indicates that the AP 11 is on a channel included in the 5 GHz band, and the other recommended APs (APs 12 to 16) are on channels in frequency bands in the 2.4 GHz band.

Although the recommended AP list received by the CPU 212 in step S701 and held in step S901 includes other information, such as the BSSIDs (MAC addresses), preference values, and the like of the recommended APs, these are omitted from the example illustrated in FIG. 13.

Meanwhile, a setting state 1302 is a table showing the setting state of the MFP 100, which is the STA. The setting state 1302 indicates the setting values stored in the non-volatile memory 215 of the MFP 100. The setting state 1302 indicates that the 5 GHz band is set as the frequency band used by the MFP 100 for operating as a STA. In other words, as described with reference to step S902, the MFP 100 is in a state where a frequency band in the 5 GHz band is stored in the non-volatile memory 215 as a setting value. Meanwhile, the setting state 1302 indicates whether the direct-side channel is set to be enabled. The "direct-side channel" is a channel used in a communication mode in which the MFP 100 communicates directly with an external device without traversing an external AP. In other words, the direct-side channel is a channel used when the MFP 100 operates in the P2P mode described above. In this example, the direct-side channel is set to "disabled" in the setting state 1302. In other words, in this state, the MFP 100 is not operating in the P2P mode described above.

In such a case, of the plurality of recommended APs, only the AP 11 satisfies the condition of "5 GHz" set in the MFP 100, as indicated in the recommended AP list 1301. Accordingly, the APs 12 to 16 are excluded from the candidates for the connection destination AP in the processing of step S903, and the remaining AP 11 is determined in step S905 to be uniquely determined as the connection destination AP. Accordingly, in step S912 of Case 1, the CPU 212 determines the AP 11 as the connection destination AP, and executes processing to connect to the AP 11.

Note that in the recommended AP list 1301, the underlined part indicates a value of the reason (basis) for the determination when the CPU 212 determines the connection destination AP. In other words, in the example in FIG. 13, the underlined part indicates that the CPU 212 has selected (determined) the AP 11 as the connection destination AP, with the final reason for the determination being that the AP 11 is the only one of the plurality of recommended APs in the recommended AP list 1301 that uses 5 GHz.

In step S906, the CPU 212 determines whether the state is a simultaneous operation state. "Simultaneous operation state" refers to a state in which at least two communication modes, including the wireless infrastructure mode and the P2P (WLAN) mode described above, are operating in parallel. In other words, the "simultaneous operation state" is a state in which the MFP 100 uses a communication mode for communicating via an external AP, and a communication mode for communicating directly without traversing an external AP, in parallel. If the CPU 212 determines that the state is the simultaneous operation state, the sequence moves to step S907. However, if the CPU 212 determines that the state is not the simultaneous operation state, the sequence moves to step S909.

In step S907, the CPU 212 excludes, from the recommended AP list, recommended APs that use channels different from those used in the P2P mode. This is because when the MFP 100 is in the simultaneous operation state, depending on the hardware of the wireless unit 226, the communication throughput may be slow if the channel on the direct (P2P) side and the channel on the infrastructure side do not match. In other words, excluding the recommended APs on channels other than the channel on the direct (P2P) side from the list of recommended APs makes it possible to prevent the possibility of a drop in communication throughput.

In other words, the processing of step S907 is processing for, when the MFP 100 operates in a communication mode for communicating via an external AP and a communication mode for communicating directly without traversing an external AP in parallel, selecting a recommended AP that uses a frequency band included in the frequency band being used in the communication mode for communicating directly.

Note that depending on the hardware of the wireless unit 226, for example, the communication throughput may be slow if the channel on the direct (P2P) side and the channel on the infrastructure side do match. If the MFP 100 has such a wireless unit 226, in step S907, the CPU 212 may exclude the recommended APs that use channels that match the channel used in the direct (P2P) communication mode from the recommended AP list. In other words, the processing of step S907 can also be called processing by which the CPU 212 selects the recommended AP on the basis of the performance of the wireless interface (the wireless unit 226) of the MFP 100 and the operation state (communication mode) of the MFP 100.

In step S908, the CPU 212 determines whether a candidate for the connection destination AP will be uniquely determined using the excluded recommended AP list. If the CPU 212 determines that a candidate will be uniquely determined, the sequence moves to step S912. However, if the CPU 212 determines that a candidate will not be uniquely determined, the sequence moves to step S909. The CPU 212 determines that a candidate will not be uniquely determined when a plurality of recommended APs remain in the recommended AP list.

### Case 2

In step S912, the CPU 212 performs control to connect to the recommended AP determined to be uniquely determined in step S908. Hereinafter, a case where the CPU 212 determines that the connection destination AP will be uniquely determined in step S908 (YES in step S908) and executes the processing of step S912 will be referred to as "Case 2".

Refer to FIG. 14. FIG. 14 is a diagram illustrating an example of the recommended AP list and the setting state of the MFP 100 when the connection destination AP is uniquely determined in Case 2.

In this example, a setting state 1402 indicates that either the 2.4 GHz band or the 5 GHz band is set to be usable as the frequency band used by the MFP 100 operating as a STA. The setting state 1402 also indicates that the MFP 100 is in a device state in which channel 36 is used when operating in direct communication mode (P2P mode).

Of the plurality of recommended APs, only the AP 12 satisfies the condition of being on channel 36, as indicated in a recommended AP list 1401. In such a case, the APs 11 and 13 to 16 are excluded from the candidates for the connection destination AP in the processing of step S907, and the remaining AP 12 is determined in step S908 to be uniquely determined as the connection destination AP. In other words, the underlined part indicates an example in which the direct-side channel is the final reason for the determination and the AP 12 is selected as the connection destination AP. Accordingly, in step S912 of Case 2, the CPU 212 determines the AP 12 as the connection destination AP, and executes processing to connect to the AP 12.

In step S909, the CPU 212 sorts the recommended AP list by channel. In step S910, the CPU 212 excludes, from the recommended AP list, the recommended APs aside from the recommended AP having the lowest number of overlapping channels. In other words, the processing of step S909 is processing for selecting, of the plurality of recommended APs, an AP that uses a frequency that overlaps with the other recommended APs the least.

Here, the number of overlapping channels being high means that it is highly likely that there are many APs communicating on that channel around the MFP 100. For example, if three recommended APs on channel 40 and one recommended AP on channel 3 are found in the recommended AP list, it is conceivable that there are three recommended APs already using channel 40 and one recommended AP using channel 3 around the MFP 100. In other words, it is more likely that the communication line on channel 40 is more congested than on channel 3. If, for example, the MFP 100 switches the connection destination to a recommended AP having such a high number of overlapping channels, the communication throughput may be slow due to congestion on the communication line. Accordingly, excluding recommended APs other than the AP having the lowest number of overlapping channels from the recommended AP list makes it possible to reduce the likelihood of the communication throughput slowing down.

In step S911, the CPU 212 determines whether a candidate for the connection destination AP will be uniquely determined using the excluded recommended AP list. If the CPU 212 determines that a candidate will be uniquely determined, the sequence moves to step S912. However, if the CPU 212 determines that a candidate will not be uniquely determined, the sequence of FIG. 9B ends. The CPU 212 determines that a candidate will not be uniquely determined when a plurality of recommended APs remain in the recommended AP list.

### Case 3

In step S912, the CPU 212 performs control to connect to the recommended AP determined to be uniquely determined in step S911. Hereinafter, a case where the CPU 212 determines that the connection destination AP will be uniquely determined in step S911 (YES in step S911) and executes the processing of step S912 will be referred to as "Case 3".

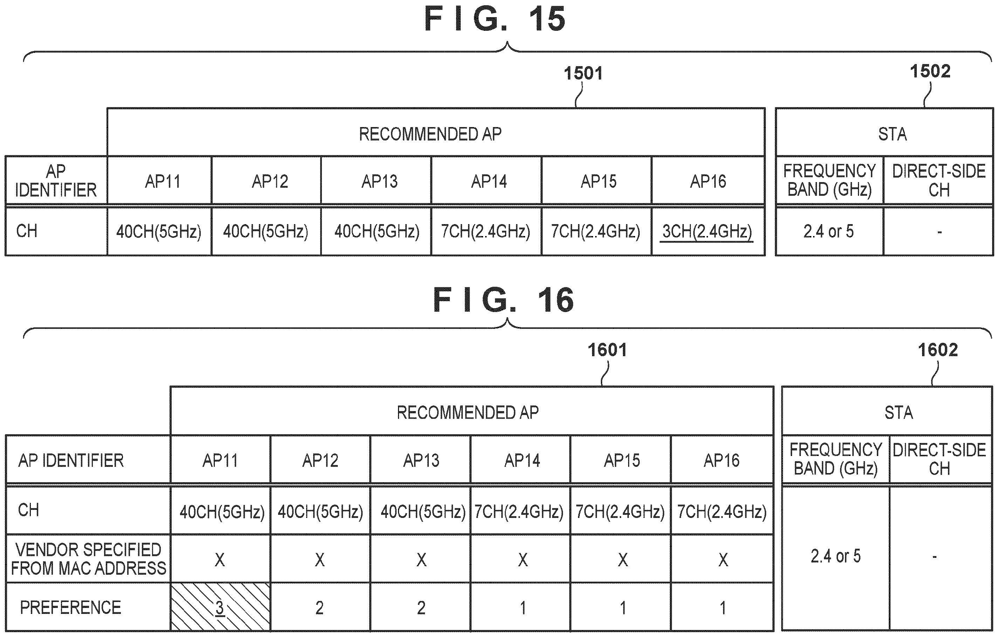

Refer to FIG. 15. FIG. 15 is a diagram illustrating an example of the recommended AP list and the setting state of the MFP 100 when the AP is uniquely determined in Case 3.

In this example, a setting state 1502 indicates that either the 2.4 GHz band or the 5 GHz band is set to be usable as the frequency band used by the MFP 100 operating as a STA. The setting state 1502 also indicates that the wireless direct setting of the MFP 100 is set to be disabled.

As shown in the recommended AP list 1501, there are three recommended APs on channel 40 (APs 11 to 13), two recommended APs on channel 7 (APs 14 and 15), and one recommended AP on channel 3 (AP 16). In such a case, the APs 11 to 15 are excluded from the candidates for the connection destination AP in the processing of step S910, and the remaining AP 16 is determined in step S911 to be uniquely determined as the connection destination AP. In other words, the underlined part indicates that the AP 16 is selected as the connection destination AP because the number of overlapping channels being the lowest is the final reason for the determination. Accordingly, in step S912 of Case 3, the CPU 212 determines the AP 16 as the connection destination AP, and executes processing to connect to the AP 16.

In this manner, according to the processing of FIGS. 9A and 9B, when a connection destination AP change request is received, the MFP 100 performs control to change an AP serving as the connection destination such that an AP, among the plurality of recommended APs, that is determined on the basis of a first condition other than the preference value becomes the connection destination AP after the change in the processing of step S702 and on, regardless of the preference value received from the AP connected. In other words, in the processing in FIGS. 9A and 9B, the MFP 100 performs processing for determining the connection destination AP using the first set of conditions in preference to the preference value.

The first set of conditions includes conditions for selecting the connection destination AP after the change in the processing of step S702 on, using information on at least one of the respective frequency bands and channels of the plurality of recommended APs included in the set of parameters received from the currently-connected AP.

Specifically, the first set of conditions includes the following conditions.
- the condition that the channel used by the recommended AP conforms to the setting for the channel used by the MFP 100 (step S903)
- the condition that the channel used by the recommended AP matches the direct-side channel when the MFP 100 is running in simultaneous mode (step S907)
- the condition that the recommended AP uses the minimum number of overlapping channels (S910)

If the connection destination AP after the change in the processing of step S702 and on is not determined on the basis of the first condition, the CPU 212 performs the processing illustrated in FIG. 10 and on. In other words, the CPU 212 performs control such that the AP determined on the basis of the preference value and a second condition is changed to the post-change connection destination AP in the processing of step S702 and on. The second condition is a condition that is different from the preference value and the first condition.

FIG. 10 is an example of the flow of an AP determination method using the MAC address, the preference value, and the like. The processing in FIG. 10 is realized, for example, by the CPU 212 reading out a program stored in the ROM 213, which is a computer-readable recording medium, into the RAM 214 and executing that program.

In step S1001, the CPU 212 determines whether the connection destination AP has been determined. If the CPU 212 determines that the connection destination AP has been determined, the processing in FIG. 10 ends. However, if the CPU 212 determines that the connection destination AP has not been determined, the sequence moves to step S1002.

In step S 1002, the CPU 212 specifies the vendor of the recommended AP (the manufacturer (maker) of the AP) from the MAC address obtained in step S901. Specifically, the CPU 212 refers to the first few (e.g., six) digits of the MAC address and specifies the vendor of the recommended AP. More specifically, the CPU 212 obtains the MAC address using, for example, the BSSID included in the Neighbor Report Element received from the AP currently connected in step S701 or the like.

In step S1003, the CPU 212 determines whether a recommended AP having the same vendor is included in the recommended AP list. If the CPU 212 determines that a recommended AP having the same vendor is included in the recommended AP list, the sequence moves to step S1004. However, if the CPU 212 determines that a recommended AP having the same vendor is not included in the recommended AP list, the processing in FIG. 10 ends. Specifically, the CPU 212 determines whether the recommended AP list includes a plurality of recommended APs for which the first few (e.g., six) digits of the MAC addresses are the same. If the recommended AP list does not include a set of recommended APs having the same vendor in step S1003, each recommended AP is determined as a vendor-representative AP.

In other words, in the processing for determining the connection destination AP on the basis of the MAC address, the preference value, and the like, the CPU 212 performs control such that the connection destination AP after the change in the processing of step S702 and on is determined on the basis of the preference value for a plurality of recommended APs that, among the plurality of recommended APs, have a relationship which satisfies a third condition included in the second condition. The third condition includes the condition that the vendor is the same. The third condition also includes the condition that the first few digits of the MAC addresses match.

On the other hand, the CPU 212 performs control such that the connection destination AP after the change in the processing of step S702 and on is determined not on the basis of the preference value from a plurality of recommended APs that, among the plurality of recommended APs, have a relationship which does not satisfy the third condition. In other words, the CPU 212 makes a determination of NO in step S1003, and performs processing for determining the connection destination AP according to the second set of conditions (described later).

In step S1004, the CPU 212 performs processing for determining the vendor-representative AP from the recommended APs having the same vendor using the preference value or the like. This makes it possible for the CPU 212 to select, on a vendor-by-vendor basis, a recommended AP having a good connection environment (e.g., a recommended AP having a high communication throughput).

Here, the processing performed in step S1004 will be described in detail with reference to FIG. 11. FIG. 11 is a flowchart illustrating an example of processing for determining the vendor-representative AP using the preference value or the like. The processing in FIG. 11 is realized, for example, by the CPU 212 reading out a program stored in the ROM 213, which is a computer-readable recording medium, into the RAM 214 and executing that program.

In step S1101, the CPU 212 determines a representative AP for each vendor, one by one, using the preference value. For example, the CPU 212 compares the recommended APs in the recommended AP list that have the same vendor according to the preference values thereof, and determines a representative AP for each vendor on the basis of the comparison result. In other words, when there are a plurality of recommended APs having the same vendor (YES in step S1003) among the plurality of recommended APs, in step S1101, the CPU 212 performs processing for determining, on the basis of the preference values of the recommended APs, an AP that is preferred as the connection destination AP, among the recommended APs having the same vendor.

In this manner, when the post-change connection destination AP is not determined on the basis of the first set of conditions, the CPU 212 performs control such that the AP determined on the basis of the received preference value is changed to the post-change connection destination AP in the processing of step S702 and on.

Specifically, excluding the recommended AP having a preference value of 0, the CPU 212 uses the recommended AP having the highest value, from 1 to 255, as the representative AP. As described above, according to the IEEE 802.11 series communication standard, the preference value is a numerical value indicating a connection priority. Accordingly, using the recommended AP having a high preference value as the representative AP makes it possible to select the recommended AP having a high connection priority as the representative AP on a vendor-by-vendor basis.

Additionally, as described above, the method for calculating the preference value is not specified by the standard. However, there are situations where the preference value is determined by a similar calculation method specified for each vendor. In other words, since it is not necessarily the case that, among recommended APs of different vendors, the connection destination AP should be determined using the preference value, the comparison is performed for each recommended AP having the same vendor in step S1101.

In step S1102, the CPU 212 determines whether one representative AP has been determined for each vendor. If the CPU 212 determines that a representative AP has been determined, the processing in FIG. 11 ends. However, if the CPU 212 determines that a representative AP has not been determined, the sequence moves to step S1103. A case where one representative AP has not been determined for each vendor is a case where the CPU 212 has compared the recommended APs having the same vendor according to the preference values thereof in step S1101 and, as a result, there is a recommended AP having the highest preference value and having an equivalent preference value. "Equivalent preference values" may mean the preference values match, or that the preference values are similar.

As will be described later, the CPU 212 performs control such that when the plurality of recommended APs includes recommended APs having an equivalent preference value, the AP determined on the basis of the second condition, among the recommended APs having equivalent preference values, is changed to the connection destination AP after the change in the processing of step S702 and on.

In step S1103, the CPU 212 uses the radio wave strength (signal-to-noise ratio; "SNR" hereinafter) to determine the recommended AP having the highest radio wave strength (SNR) as the vendor-representative AP. The CPU 212 obtains the radio wave strength of the recommended AP using a beacon as specified in the IEEE 802.11 series communication standard. In step S1103, the CPU 212 executes an AP search, for example. Specifically, the CPU 212 starts searching for the recommended AP by transmitting a device search request (Probe Request) using the MAC address of the recommended AP. Then, by receiving a wireless signal transmitted from the recommended AP, such as a device search response (Probe Response), a beacon (information transmitted actively by the AP at regular intervals), or the like, the CPU 212 searches out and discovers the recommended AP. The AP information obtained from the recommended AP by the CPU 212 through such an AP search includes at least one of information indicating the SSID, radio wave strength, frequency band, MAC address, authentication mode, encryption mode, and the like of the recommended AP.

The encryption mode is information indicating, for example, a security mode such as WEP, WPA1, WPA2, WPA3, or the like. "WEP" is an acronym for "Wired Equivalent Privacy", and "WPA" is an acronym for "Wi-Fi Protected Access". The content of the AP information varies depending on the recommended AP model, model number, settings, and the like. In step S1103, the CPU 212 compares the radio wave strengths (SNR) of the recommended APs obtained through the AP search and determines the recommended AP having the highest radio wave strength (SNR) as the vendor-representative AP.

In step S1104, the CPU 212 determines whether a representative AP has been determined for each vendor. If the CPU 212 determines that a representative AP has been determined for each vendor, the processing in FIG. 11 ends. However, if the CPU 212 determines that a representative AP has not been determined for each vendor, the sequence moves to step S1105.

In step S1105, the CPU 212 uses the radio wave strength (Qual) to determine the recommended AP having the highest radio wave strength as the vendor-representative AP. The radio wave strength (Qual) is the radio wave strength signal quality (Reference Signal Received Quality). Additionally, in step S1105, the CPU 212 compares the radio wave strengths (Qual) obtained in the AP search in step S1103 and determines the recommended AP having the highest radio wave strength (Qual) as the vendor-representative AP.

In this manner, the CPU 212 performs processing for selecting, as the vendor-representative AP, the recommended AP having the highest preference value, the recommended AP having the highest radio wave strength (SNR), or the recommended AP having the highest radio wave strength (Qual) within the same vendor. This makes it possible to select, on a vendor-by-vendor basis, a recommended AP having a good connection environment (e.g., a recommended AP having a high communication throughput).

Although the CPU 212 performs the processing of determining the recommended AP having the highest radio wave strength (SNR) as the vendor-representative AP in step S1103 when it is determined in step S1102 that the vendor-representative AP will not be determined for each vendor, the processing is not limited thereto. For example, if the CPU 212 determines in step S1102 that the vendor-representative AP will not be determined for each vendor, the vendor-representative AP may be determined using the encryption mode of the recommended AP obtained through the AP search. Specifically, the CPU 212 may compare the encryption modes of the plurality of recommended APs, and determine the recommended AP having the encryption mode with the highest security strength as the vendor-representative AP. Additionally, the CPU 212 may determine whether the vendor-representative AP has been determined as a result of comparing the encryption modes of the plurality of recommended APs. Additionally, for example, in the processing in FIG. 11, the CPU 212 may determine the vendor-representative AP using at least one of the radio wave strength (SNR), the radio wave strength (Qual), and encryption mode of the recommended AP obtained through the AP search.

The descriptions will now return to FIG. 10. In step S1005, the CPU 212 determines whether the recommended APs in the recommended AP list are only recommended APs having the same vendor. If the CPU 212 determines that the recommended APs are only recommended APs having the same vendor, the sequence moves to step S1006. However, if the CPU 212 determines that the recommended APs are not only recommended APs having the same vendor, the processing in FIG. 10 ends.

### Case 4

In step S1006, the CPU 212 determines the vendor-representative AP as the connection destination AP, and connects to the vendor-representative AP. The following descriptions will refer to a case where a connection is made to the vendor-representative AP in step S1006 as "Case 4". If the recommended APs in the recommended AP list are determined to only be recommended APs having the same vendor in step S1005, the connection destination AP can be considered to have been uniquely determined, and the CPU 212 therefore executes this processing.

Refer to FIG. 16. FIG. 16 is a diagram illustrating an example of the recommended AP list and the setting state of the MFP 100 when the connection destination AP is uniquely determined in Case 4. In this example, a setting state 1602 is the same as the setting state 1502 in FIG. 15, and will therefore not be described.

In this example, the plurality of recommended APs in a recommended AP list 1601 have the same vendor. Additionally, the underlined part in the preference values in the recommended AP list 1601 indicates that because the recommended APs in the recommended AP list are only recommended APs having the same vendor, the preference value serves as the reason for the final determination, and the AP 11, which has the highest preference value, has been selected as the connection destination AP. Note that the hatched part in the preference values in the recommended AP list 1601 indicates that the preference value serves as the reason for the final determination, and the AP 11, which has the highest preference value, has been selected as the vendor-representative AP. Accordingly, in step S1006 of Case 4, the CPU 212 determines the AP 11 as the connection destination AP, and executes processing to connect to the AP 11.

If, in the processing in FIG. 10, the connection destination AP will not be uniquely determined from among the plurality of recommended APs, the connection destination AP is determined through the processing in FIG. 12.

FIG. 12 is a flowchart illustrating an example of processing for determining the connection destination AP on the basis of the second set of conditions, executed in step S803. The processing in FIG. 12 is processing for uniquely determining the connection destination AP by comparing the representative APs for each vendor determined through the processing of step S1004. The processing in FIG. 12 is realized, for example, by the CPU 212 reading out a program stored in the ROM 213, which is a computer-readable recording medium, into the RAM 214 and executing that program.

In step S1201, the CPU 212 determines whether the connection destination AP has been determined. If the CPU 212 determines that the connection destination AP has been determined, the processing in FIG. 12 ends. However, if the CPU 212 determines that the connection destination AP has not been determined, the sequence moves to step S1202.

In step S1202, the CPU 212 uses the radio wave strength (SNR) to compare the representative APs of each vendor, determined through the processing of step S1004, and determines the vendor-representative AP having the highest radio wave strength (SNR) as the connection destination AP. The CPU 212 executes this processing using, for example, the radio wave strength obtained through the AP search in step S1103.

In step S1203, the CPU 212 determines whether the connection destination AP has been uniquely determined. If the CPU 212 determines that the connection destination AP has been uniquely determined, the sequence moves to step S1205. However, if the CPU 212 determines that the connection destination AP has not been uniquely determined, the sequence moves to step S1204.

### Case 5

In step S1205, the CPU 212 performs control to connect to the vendor-representative AP determined to be uniquely determined in step S1203. Hereinafter, a case where the CPU 212 determines that the connection destination AP will be uniquely determined in step S1203 (YES in step S1203) and executes the processing of step S1205 will be referred to as "Case 5".

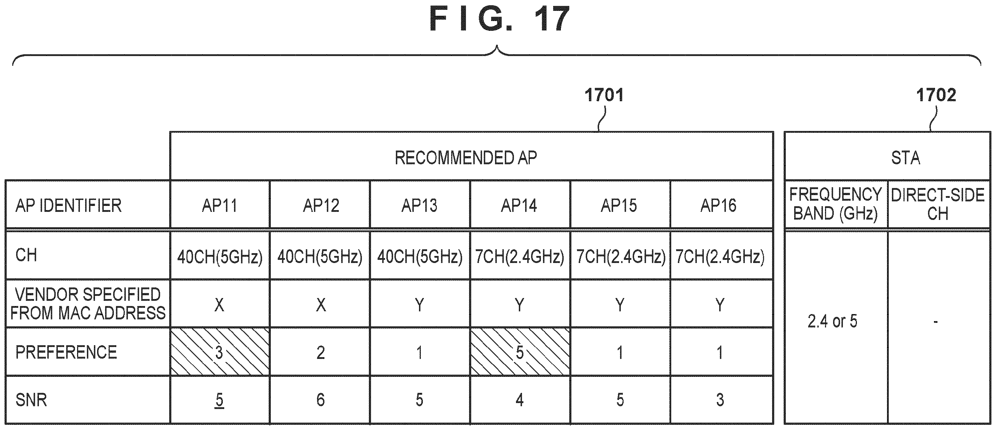

Refer to FIG. 17. FIG. 17 is a diagram illustrating an example of the recommended AP list and the setting state of the MFP 100 when the connection destination AP is uniquely determined in Case 5. In this example, a setting state 1702 is the same as the setting state 1502 in FIG. 15, and will therefore not be described.

In this example, in the preference values in a recommended AP list 1701, the hatched part indicates the reason for the final determination of the vendor-representative AP. In other words, FIG. 17 indicates, with the hatched part, that the preference value serves as the final reason for the determination, with the AP 11, which has the highest preference value for a vendor X, and the AP 14, which has the highest preference value for a vendor Y, having been selected as vendor-representative APs. In addition, the underlined part indicates that the radio wave strength (SNR) is the final reason for the determination, and that the AP 11, which has the highest SNR among the vendor-representative APs, has been selected as the connection destination. Accordingly, in step S1205 of Case 5, the CPU 212 determines the AP 11, which is the vendor-representative AP and is the recommended AP having the highest SNR among the vendor-representative APs, as the connection destination AP. The CPU 212 then executes processing to connect to the AP 11 determined as the connection destination AP.

In step S1204, the CPU 212 uses the radio wave strength (Qual) to compare the representative APs of each vendor, determined through the processing of step S1004, and determines the vendor-representative AP having the highest radio wave strength (Qual) as the connection destination AP. The CPU 212 executes this processing using, for example, the radio wave strength obtained through the AP search in step S1103.

### Case 6

In step S1205, the CPU 212 determines the connection destination AP using the result of comparing the radio wave strengths (Qual) of the representative APs of each vendor. The CPU 212 then executes processing to connect to the determined connection destination AP. In the following descriptions, a case where the CPU 212 compares the radio wave strengths (Qual) of the representative APs of each vendor in step S1204 and then executes the processing of step S1205 will be referred to as "Case 6".

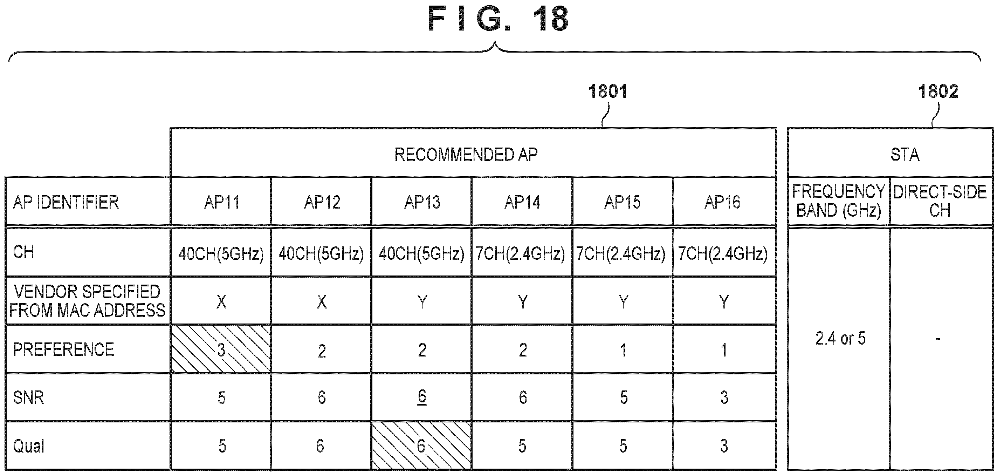

Refer to FIG. 18. FIG. 18 is a diagram illustrating an example of the recommended AP list and the setting state of the MFP 100 when the connection destination AP is uniquely determined in Case 6. In this example, a setting state 1802 is the same as the setting state 1502 in FIG. 15, and will therefore not be described.

In this example, in the preference values in a recommended AP list 1801, the hatched part indicates that the CPU 212 has selected the AP 11, which has the highest preference value for the vendor X, as the vendor-representative AP, on the basis of the preference values.

Also, for the vendor Y, the APs 13 and 14 have higher preference values than the APs 15 and 16. The preference values and the radio wave strengths (SNR) of the APs 13 and 14 are both the same. Accordingly, for the radio wave strength (Qual) in the recommended AP list 1801, the hatched part indicates that the AP 13, which has the highest radio wave strength (Qual), has been selected as the vendor-representative AP by the CPU 212.

Additionally, for the radio wave strength (SNR) in the recommended AP list 1801, the hatched part indicates that the CPU 212 has selected the AP 13, which has the highest radio wave strength (SNR) among the vendor-representative APs (the AP 11 and AP 13), as the vendor-representative AP, on the basis of the radio wave strength (SNR).

Accordingly, in step S1205 of Case 6, the CPU 212 determines the AP 13, which is the vendor-representative AP and is the recommended AP having the highest SNR among the vendor-representative APs, as the connection destination AP. The CPU 212 then executes processing to connect to the AP 13 determined as the connection destination AP.

In this example, the CPU 212 performs the processing of determining the vendor-representative AP having the highest radio wave strength (SNR) among the vendor-representative APs as the connection destination AP in step S 1202 when it is determined in step S1201 that the connection destination AP has not been determined, but the configuration is not limited thereto. For example, if the CPU 212 determines in step S1201 that the connection destination AP has not been determined, the vendor-representative APs may be compared according to the encryption mode, using the encryption modes of the recommended APs obtained through the AP search. The CPU 212 may also compare the vendor-representative APs according to the encryption mode, and determine the vendor-representative AP with the encryption mode having the highest security strength as the connection destination AP. Additionally, the CPU 212 may determine whether the connection destination AP has been determined as a result of comparing the encryption modes of the vendor-representative APs. Additionally, for example, in the processing in FIG. 12, the CPU 212 may determine the connection destination AP using at least one of the radio wave strength (SNR), the radio wave strength (Qual), and encryption mode of the recommended AP obtained through the AP search.

As described thus far, according to the present embodiment, when a connection destination AP change request is received from an AP currently connected, the MFP 100 determines the connection destination AP on the basis of the first set of conditions different from the preference value, and performs processing for connecting to the determined AP. The first set of conditions includes a condition pertaining to a device state, such as, for example, a channel setting state of the MFP 100 or the like. Additionally, even if the connection destination AP will not be determined on the basis of the first set of conditions, the MFP 100 performs processing for determining the connection destination AP on the basis of the MAC address, the reference value, and the like. Furthermore, even if the connection destination AP will not be determined as a result of this processing, the MFP 100 performs processing for determining the connection destination AP on the basis of the second set of conditions. In other words, if the connection destination AP will not be determined on the basis of the first set of conditions, the MFP 100 performs processing for determining the connection destination AP on the basis of the preference value and a condition different from the preference value. Such a configuration makes it possible for the MFP 100 to select and connect to a more optimal AP.

The above-described various types of control performed by the CPU 212 may be performed by a single piece of hardware, or the control of the apparatus as a whole may be performed by dividing the processing up among multiple pieces of hardware (e.g., multiple processors or circuits).

Although the foregoing has described the present invention in detail on the basis of preferred embodiments thereof, the present invention is not intended to be limited to the specific embodiments, and all variations that do not depart from the essential spirit of the present invention are intended to be included in the scope of the present invention. Furthermore, the above-described embodiments are merely embodiments of the present invention, and different embodiments can be combined as appropriate. Furthermore, it is also possible to skip or replace various instances of the processing in the sequences and flowcharts described above as appropriate.

Additionally, although the foregoing embodiments describe a case where the present invention is applied in an MFP as an example, the present invention is not limited to this example, and can be applied in any wireless device that functions as an STA capable of performing processing in response to a request to change a connection destination from an AP. In other words, the present invention can be applied in personal computers, PDAs, tablet terminals, mobile telephone terminals such as smartphones, music players, game consoles, e-book readers, smart watches, various measurement devices (sensor devices) such as thermometers and hygrometers, and the like. The present invention can also be applied in digital cameras (including still cameras, video cameras, network cameras, and security cameras), printers, scanners, and drones. The present invention can also be applied in video output devices, audio output devices (e.g., smart speakers), streaming media players, wireless LAN client devices (adapters) to which USB terminals, LAN cable terminals, or the like can be connected, and the like. Video output devices include, for example, a device such as a set-top box, which obtains (downloads) a moving image or still image on the Internet, specified by a URL provided by an electronic apparatus, and outputs the moving image or still image to a display device connected through a video output terminal such as an HDMI (registered trademark) terminal. Through this, streaming playback, a mirrored display (a display in which content displayed in an electronic apparatus is also displayed on a display device), or the like is implemented in a display device. The video output device also includes a media player such as a television, a hard disk recorder, a Blu-ray recorder, a DVD recorder, or the like, as well as a head-mounted display, a projector, a television, a display device (monitor), a signage device, or the like. The present invention can also be applied in a device capable of connecting through Wi-Fi, or what is known as a "smart home appliance", such as an air conditioner, a refrigerator, a washing machine, a vacuum cleaner, an oven, a microwave oven, a lighting fixture, a heating appliance, a cooling appliance, or the like.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electronic apparatus (100) comprising:
receiving means configured to receive, from an access point (AP) that is currently connected, a change request of an AP serving as a connection destination, information specifying a plurality of recommended APs serving as candidates for the connection destination AP after a change made in response to the change request, and a set of parameters, including a preference value, pertaining to each of the plurality of recommended APs;
changing means configured to change the connection destination AP on the basis of the change request received by the receiving means from the AP that is currently connected; and
control means configured to perform control to change an AP serving as the connection destination such that an AP, among the plurality of recommended APs, that is determined on the basis of a first condition regardless of the preference value received by the receiving means becomes the connection destination AP after the change by the changing means.

2. The electronic apparatus (100) according to claim 1,
wherein the first condition includes a condition for selecting an AP by using information on at least one of a frequency band and a channel of each of the plurality of recommended APs included in the set of parameters.

3. The electronic apparatus (100) according to claim 1or 2,
wherein in a case where at least one of a frequency band and a channel used by the electronic apparatus (100) is set, the first condition includes a condition for selecting an AP that conforms to the setting.

4. The electronic apparatus (100) according to any one of claims 1 to 3,
wherein in a case where the electronic apparatus (100) is operating in a first communication mode of communicating via an external access point and a second communication mode of communicating directly without traversing an external access point in parallel, the first condition includes a condition for selecting an AP that uses a frequency band included in a frequency band being used in the second communication mode.

5. The electronic apparatus (100) according to any one of claims 1 to 4,
wherein the first condition includes a condition for selecting an AP that uses a frequency which overlaps with other recommended APs the least.

6. The electronic apparatus (100) according to any one of claims 1 to 5,
wherein in a case where the connection destination AP after the change by the changing means will not be determined on the basis of the first condition, the control means performs control to change an AP serving as the connection destination such that an AP among the plurality of recommended APs, that is determined on the basis of the preference value received by the receiving means becomes the connection destination AP after the change by the changing means.

7. The electronic apparatus (100) according to any one of claims 1 to 6,
wherein in a case where the connection destination AP after the change by the changing means will not be determined on the basis of the first condition, the control means performs control to change an AP serving as the connection destination such that an AP among the plurality of recommended APs, that is determined on the basis of the preference value and a second condition different from the preference value and the first condition becomes the connection destination AP after the change by the changing means.

8. An electronic apparatus (100) comprising:
receiving means configured to receive, from an access point (AP) that is currently connected, a change request of an AP serving as a connection destination, information specifying a plurality of recommended APs serving as candidates for the connection destination AP after a change made in response to the change request, and a set of parameters, including a preference value, pertaining to each of the plurality of recommended APs;
changing means configured to change the connection destination AP on the basis of the change request received by the receiving means from the AP that is currently connected; and
control means configured to perform control to change an AP serving as the connection destination such that an AP, among the plurality of recommended APs, that is determined on the basis of the preference value received by the receiving means and a second condition different from the preference value becomes the connection destination AP after the change by the changing means.

9. The electronic apparatus (100) according to claim 8,
wherein in a case where the plurality of recommended APs include recommended APs having equivalent preference values, the control means performs control to change an AP serving as the connection destination such that an AP determined on the basis of the second condition from among the recommended APs having equivalent preference values becomes the connection destination AP after the change by the changing means.

10. The electronic apparatus (100) according to claim 8 or 9,
wherein the second condition includes a condition that is based on at least one of a radio wave strength (Signal-to-Noise Ratio), a radio wave strength (Reference Signal Received Quality), and an encryption mode of each of the plurality of recommended APs.

11. The electronic apparatus (100) according to any one of claims 8 to 10,
wherein in a case where the plurality of recommended APs include a plurality of recommended APs from the same vendor, the control means determines, on the basis of the preference value of each of the recommended APs, an AP that is preferred as the connection destination AP, from among the recommended APs from the same vendor.

12. The electronic apparatus (100) according to any one of claims 8 to 11,
wherein the control means performs control such that, among a plurality of recommended APs that have a mutual relationship that satisfies a third condition included in the second condition, the connection destination AP after the change by the changing means is determined on the basis of the preference value, and
among a plurality of recommended APs that have a mutual relationship that does not satisfy the third condition, the connection destination AP after the change by the changing means is determined not only on the basis of the preference value.

13. The electronic apparatus (100) according to claim 12,
wherein the third condition includes a condition that a vendor is the same.

14. The electronic apparatus (100) according to claim 12,
wherein the third condition includes a condition that a first several digits of MAC addresses match.

15. A method for controlling an electronic apparatus (100), the method comprising:
receiving, from an access point (AP) that is currently connected, a change request of an AP serving as a connection destination, information specifying a plurality of recommended APs serving as candidates for the connection destination AP after a change made in response to the change request, and a set of parameters, including a preference value, pertaining to each of the plurality of recommended APs;
changing the connection destination AP on the basis of the change request received from the AP that is currently connected; and
performing control to change an AP serving as the connection destination such that an AP, among the plurality of recommended APs, that is determined on the basis of a first condition regardless of the preference value received from the AP that is currently connected, becomes the connection destination AP after the change.

16. A method for controlling an electronic apparatus (100), the method comprising:
receiving, from an access point (AP) that is currently connected, a change request of an AP serving as a connection destination, information specifying a plurality of recommended APs serving as candidates for the connection destination AP after a change made in response to the change request, and a set of parameters, including a preference value, pertaining to each of the plurality of recommended APs;
changing the connection destination AP on the basis of the change request received from the AP that is currently connected; and
performing control to change an AP serving as the connection destination such that an AP, among the plurality of recommended APs, that is determined on the basis of the preference value received by the AP that is currently connected and a second condition different from the preference value, becomes the connection destination AP after the change.

17. A computer-readable storage medium storing a program which when loaded into a computer and executed allows the computer to function as the electronic apparatus (100) as claimed in any one of claims 1 to 14.

18. A program which when loaded into a computer and executed allows the computer to function as the electronic apparatus (100) as claimed in any one of claims 1 to 14.
